# EUROPEAN PATENT SPECIFICATION

(11) **EP 3 096 506 B1**
(45) Date of publication and mention of the grant of the patent: **01.05.2019**
(21) Application number: 15191669.9
(22) Date of filing: 27.10.2015
(51) Int. Cl.: H04M 1/05, G06F 1/16, H04M 1/725, G06F 3/0346, G06F 3/0481, G06F 3/0482, G06F 3/0488, G09G 5/10, G09G 5/14, H04B 1/3827, G06F 3/01, G06F 3/0485

(54) **WATCH-TYPE MOBILE TERMINAL AND METHOD OF CONTROLLING THEREFOR**
MOBILES ENDGERÄT VOM UHRENTYP UND VERFAHREN ZUR STEUERUNG DAVON
TERMINAL MOBILE DE TYPE SURVEILLANCE ET PROCÉDÉ DE COMMANDE DE CELUI-CI

(30) Priority: 22.05.2015 US 201562165204 P; 21.07.2015 KR 20150103324
(43) Date of publication of application: 23.11.2016
(73) Proprietor: LG Electronics Inc., Seoul 07336 (KR)
(72) Inventor: CHI, Jumin, 06772 Seoul (KR); KIM, Jonghwan, 06772 Seoul (KR); SONG, Younghoon, 06772 Seoul (KR); KIM, Yung, 06772 Seoul (KR)
(74) Representative: Ter Meer Steinmeister & Partner

(56) References cited:
- EP-A2- 2 109 030
- WO-A1-2014/175513
- WO-A1-2015/049715
- WO-A2-2010/024986
- WO-A2-2013/130203
- US-A1- 2013 271 350

## Description

### BACKGROUND OF THE INVENTION

### Field of the Invention

The present invention relates to a watch-type mobile terminal and a method of controlling therefor, and more particularly, to a method for a watch-type mobile terminal equipped with a long display in a horizontal direction or vertical direction to provide contents.

### Discussion of the Related Art

A mobile terminal is a device which can perform various functions. Examples of such functions include data and voice communications, capturing images and video via a camera, recording audio, playing music files and outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to a presence or non-presence of mobility. And, the mobile terminals can be further classified into handheld terminals and vehicle mounted terminals.

Meanwhile, for a legacy watch-type mobile terminal, it is difficult to display various contents all at once since an area of a display unit is small. As a result, a user has to perform page switching several times to enter a minute detail. In addition, although multitasking is performed, it was difficult to check a currently executed application due to a limited area of the display unit.

### SUMMARY OF THE INVENTION

Accordingly, one object of the present invention is to solve the aforementioned problem and other problems.

Another object of the present invention is to provide a watch-type mobile terminal capable of displaying a plurality of contents at the same time by providing a long display unit mounted on the watch-type mobile terminal and a method of controlling therefor.

### BACKGROUND OF THE INVENTION

### Field of the Invention

The present invention relates to a watch-type mobile terminal and a method of controlling therefor, and more particularly, to a method for a watch-type mobile terminal equipped with a long display in a horizontal direction or vertical direction to provide contents.

### Discussion of the Related Art

A mobile terminal is a device which can perform various functions. Examples of such functions include data and voice communications, capturing images and video via a camera, recording audio, playing music files and outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to a presence or non-presence of mobility. And, the mobile terminals can be further classified into handheld terminals and vehicle mounted terminals.

Meanwhile, for a legacy watch-type mobile terminal, it is difficult to display various contents all at once since an area of a display unit is small. As a result, a user has to perform page switching several times to enter a minute detail. In addition, although multitasking is performed, it was difficult to check a currently executed application due to a limited area of the display unit.

WO 2010/024986 A2 discloses in a computing device, event notifications taking the form of alerts that can be presented in different ways. The particular form of each event notification depends on the nature of the event, the user task being performed at the time the event occurs, the user's preferences, or any combination thereof. Event notifications are presented in the form of banner alerts. Obtrusiveness is minimized by presenting the notification at a location near the edge of the screen (such as a bottom edge), and slightly shrinking the active display area to make room for the event notification. In this manner, event notifications can be presented without obscuring any part of the active display area. In addition, the user can obtain more information about the event by activating the notification (for example by tapping on it).

WO 2014/175513 A1 discloses a mobile terminal and a control method thereof. The mobile terminal includes a main body covering at least one area of a wrist, a display disposed on a front surface of the main body, a sensing unit configured to sense flatness of the wrist and a direction that the wrist faces, and a controller configured to select a display area for displaying screen information on the display based on the flatness of the wrist and the direction that the wrist faces, sensed by the sensing unit.

WO 2013/130203 A2 discloses an electronic device including detectors for altering the presentation of data on one or more displays. In a wearable electronic device, a flexible housing can be configured to enfold about an appendage of a user, such as a user's wrist. A display can be disposed along a major face of the flexible housing. A control circuit can be operable with the display. A gaze detector can be included to detect a gaze direction, and optionally a gaze cone. An orientation detector can be configured to detect an orientation of the electronic device relative to the user. The control circuit can alter a presentation of data on the display in response to a detected gaze direction, in response to detected orientation of the wearable electronic device relative to the user, in response to touch or gesture input, or combinations thereof. Secondary displays can be hingedly coupled to the electronic device.

### SUMMARY OF THE INVENTION

Accordingly, one object of the present invention is to solve the aforementioned problem and other problems.

Another object of the present invention is to provide a watch-type mobile terminal capable of displaying a plurality of contents at the same time by providing a long display unit mounted on the watch-type mobile terminal and a method of controlling therefor.

Still another object of the present invention is to provide a watch-type mobile terminal capable of dividing a display unit into a plurality of areas and providing a notification to a plurality of the areas in order according to occurrence of an event and a method of controlling therefor.

The invention achieves these objects via a watch-type mobile terminal according to claim 1 and a method according to claim 4. Advantageous embodiments are shown in the dependent claims.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to one embodiment, a watch-type mobile terminal includes a display unit configured to include a first display area and a second display area located at the top of the first display area, a sensing unit and a controller. In this instance, if a first event occurs, the controller can display a notification for the first event on at least a partial area of the first display area.

The predetermined content is displayed on the upper part of the first display area before the first event occurs.

The controller is further configured to move the first notification to the upper part of the first display area and move the predetermined content to the second display area when the priority of the second notification is greater than the priority of the predetermined content, and to continue to display the predetermined content in the upper part of the first display area and move the first notification to the second display area when the priority of the second notification is less than the priority of the predetermined content.

The second event occurs after the first event.

The priority of the predetermined content can be set by a user-setting.

The second display area may be farther from the user's gaze than the first display area, when the user rests their wrist at an angle on a flat surface.

A corresponding method of controlling a watch-type mobile terminal is provided.

The display unit may comprise a extended screen stretched in a horizontal direction or a vertical direction.

Advantageous effects of a watch-type mobile terminal according to an embodiment of the present invention and a method of controlling therefor are described in the following.

According to at least one or more embodiments of the present invention, a user can easily use a plurality of contents at the same time using a watch-type mobile terminal including a long display in horizontal direction or vertical direction.

According to an unclaimed embodiment, a user can use a minute detail of an application without a plurality of page switching operations using a watch-type mobile terminal including a long display in horizontal direction or vertical direction.

According to at least one or more embodiments of the present invention, when a plurality of events occur, a watch-type mobile terminal can display a notification or content according to importance of the notification or the content to enable a user to easily recognize the notification or the content.

It is to be understood that both the foregoing general description and the following detailed description of the preferred embodiments of the present invention are exemplary and explanatory and are intended to provide further explanation of the invention as claimed.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal according to an embodiment of the present disclosure;
FIGS. 1B and 1C are conceptual views of one example of the mobile terminal, viewed from different directions;
FIG. 2 is a conceptual view of a deformable mobile terminal according to an alternative embodiment of the present disclosure;
FIG. 3 is a conceptual view of a wearable mobile terminal according to another alternative embodiment of the present disclosure;
FIG. 4 is a conceptual view of a wearable mobile terminal according to another alternative embodiment of the present disclosure;
FIG. 5 is a diagram illustrating an example of a watch-type mobile terminal related to an embodiment of the present invention;
FIG. 6 is a diagram illustrating an example of a display unit of a mobile terminal related to an embodiment of the present invention;
FIG. 7 is a diagram illustrating an example of a display unit of a mobile terminal related to an embodiment of the present invention;
FIG. 8 is a diagram illustrating an example of displaying contents on a display unit shown in FIG. 7;
FIG. 9 is a diagram illustrating an example of displaying contents according to an input signal input on a display unit of a mobile terminal related to an embodiment of the present invention;
FIG. 10 is a diagram illustrating an example of displaying contents according to an input signal input on a display unit of a mobile terminal related to an embodiment of the present invention;
FIG. 11 is a diagram illustrating an example of displaying contents according to an input signal input on a display unit of a mobile terminal related to an embodiment of the present invention;
FIG. 12 is a diagram illustrating an example of displaying contents according to an input signal input on a display unit of a mobile terminal related to an embodiment of the present invention;
FIG. 13 is a diagram illustrating an example of displaying contents according to an input signal input on a display unit of a mobile terminal related to an embodiment of the present invention;
FIG. 14 is a diagram illustrating an example of displaying contents according to an input signal input on a display unit of a mobile terminal related to an embodiment of the present invention;
FIG. 15 is a diagram illustrating an example of displaying contents according to an input signal input on a display unit of a mobile terminal related to an embodiment of the present invention;
FIG. 16 is a diagram illustrating an example of displaying contents on a display unit of a mobile terminal based on a size of an icon;
FIG. 17 is a diagram illustrating an example of displaying contents on a display unit of a mobile terminal based on a size of an icon;
FIG. 18 is a diagram illustrating an example of displaying a notification on a display unit when a plurality of events occur in a mobile terminal related to an embodiment of the present invention;
FIG. 19 is a diagram illustrating an example of displaying a notification on a display unit when a plurality of events occur in a mobile terminal related to an embodiment of the present invention;
FIG. 20 is a diagram illustrating an example of displaying a notification on a display unit when a plurality of events occur in a mobile terminal related to an embodiment of the present invention;
FIG. 21 is a diagram illustrating an example of displaying a notification on a display unit when a plurality of events occur in a mobile terminal related to an embodiment of the present invention;
FIG. 22 is a diagram illustrating an embodiment of displaying a pop-up icon associated with displayed contents when the contents are displayed on a display unit of a mobile terminal related to an embodiment of the present invention;
FIG. 23 is a diagram illustrating an embodiment of displaying a pop-up icon associated with displayed contents when the contents are displayed on a display unit of a mobile terminal related to an embodiment of the present invention;
FIG. 24 is a diagram illustrating an embodiment of displaying a pop-up icon for controlling displayed contents when the contents including a list are displayed on a display unit of a mobile terminal related to an embodiment of the present invention;
FIG. 25 is a diagram illustrating an example of the pop-up icon mentioned earlier in FIG. 24;
FIG. 26 is a diagram illustrating an embodiment of contents displayed on a display unit when an input signal is sensed on the pop-up icon mentioned earlier in FIG. 24;
FIG. 27 is a diagram illustrating an embodiment of controlling contents according to an input signal when a pop-up icon is displayed on a display unit of a mobile terminal related to an embodiment of the present invention;
FIG. 28 is a diagram illustrating an example of controlling contents according to an input signal when a pop-up icon is displayed on a display unit of a mobile terminal related to an embodiment of the present invention;
FIG. 29 is a diagram illustrating an example of controlling contents according to an input signal when a pop-up icon is displayed on a display unit of a mobile terminal related to an embodiment of the present invention;
FIG. 30 is a diagram illustrating an example of controlling contents displayed on a display unit based on an angle sensed by a mobile terminal related to an embodiment of the present invention;
FIG. 31 is a diagram illustrating an example of controlling contents displayed on a display unit based on an angle sensed by a mobile terminal related to an embodiment of the present invention;
FIG. 32 is a diagram illustrating an example of controlling contents displayed on a display unit based on an angle sensed by a mobile terminal related to an embodiment of the present invention;
FIG. 33 is a diagram illustrating an example of controlling contents displayed on a display unit based on an angle sensed by a mobile terminal related to an embodiment of the present invention;
FIG. 34 is a diagram illustrating an example of controlling contents displayed on a display unit based on an angle sensed by a mobile terminal related to an embodiment of the present invention;
FIG. 35 is a diagram illustrating an example of controlling contents displayed on a display unit based on an illumination value sensed by a mobile terminal related to an embodiment of the present invention;
FIG. 36 is a diagram illustrating an example of controlling contents displayed on a display unit based on an illumination value sensed by a mobile terminal related to an embodiment of the present invention;
FIG. 37 is a diagram illustrating an example of controlling contents displayed on a display unit based on an illumination value sensed by a mobile terminal related to an embodiment of the present invention;
FIG. 38 is a diagram illustrating an example of controlling contents displayed on a display unit based on an illumination value sensed by a mobile terminal related to an embodiment of the present invention;
FIG. 39 is a diagram illustrating an example of controlling contents displayed on a display unit based on an illumination value sensed by a mobile terminal related to an embodiment of the present invention;
FIG. 40 is a flowchart for a method of controlling a mobile terminal according to one embodiment of the present invention;
FIG. 41 is a flowchart for a method of controlling a mobile terminal according to one embodiment of the present invention;
FIG. 42 is a flowchart for a method of controlling a mobile terminal according to one embodiment of the present invention;
FIG. 43 is a flowchart for a method of controlling a mobile terminal according to one embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function.

The accompanying drawings are used to help easily understand various technical features and it should be understood that the embodiments presented herein are not limited by the accompanying drawings. As such, the present disclosure should be construed to extend to any alterations and substitutes in addition to those which are particularly set out in the accompanying drawings. Although the terms first, second, etc. may be used herein to describe various elements, these elements should not be limited by these terms. These terms are generally only used to distinguish one element from another.

When an element is referred to as being "connected with" another element, the element can be connected with the other element or intervening elements may also be present. In contrast, when an element is referred to as being "directly connected with" another element, there are no intervening elements present. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like. By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

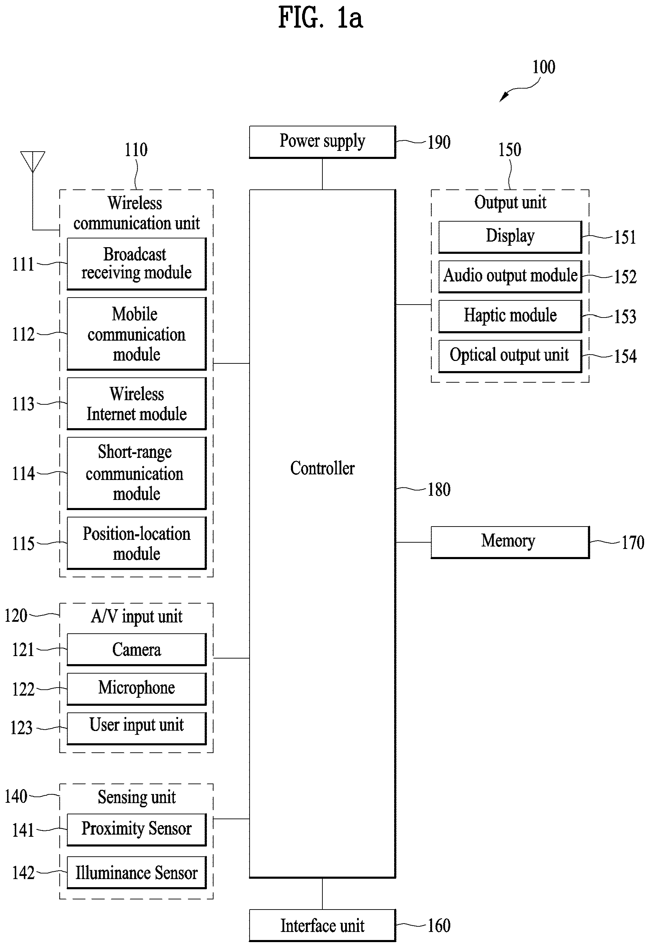

Reference is now made to FIGS. 1A-1C, where FIG. 1A is a block diagram of a mobile terminal in accordance with the present disclosure, and FIGS. IB and 1C are conceptual views of one example of the mobile terminal, viewed from different directions. The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented. Referring now to FIG. 1A, the mobile terminal 100 is shown having wireless communication unit 110 configured with several commonly implemented components.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or a function appropriate for a user by processing a signal, data, information, and the like input or output via the aforementioned configuration elements or executing an application program stored in the memory 170.

The controller 180 can provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least a part of the aforementioned configuration elements can operate by cooperating with each other to implement an operation of a mobile terminal, a control of the mobile terminal or a method of controlling the mobile terminal according to various embodiments described in the following. And, the operation of the mobile terminal, the control of the mobile terminal or the method of controlling the mobile terminal can be implemented on the mobile terminal by executing at least one or more application programs stored in the memory 170.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be implemented using a server or system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this instance, received by the mobile communication module 112. The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies. Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like. The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like. A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen. The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging. The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. IB and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101. In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

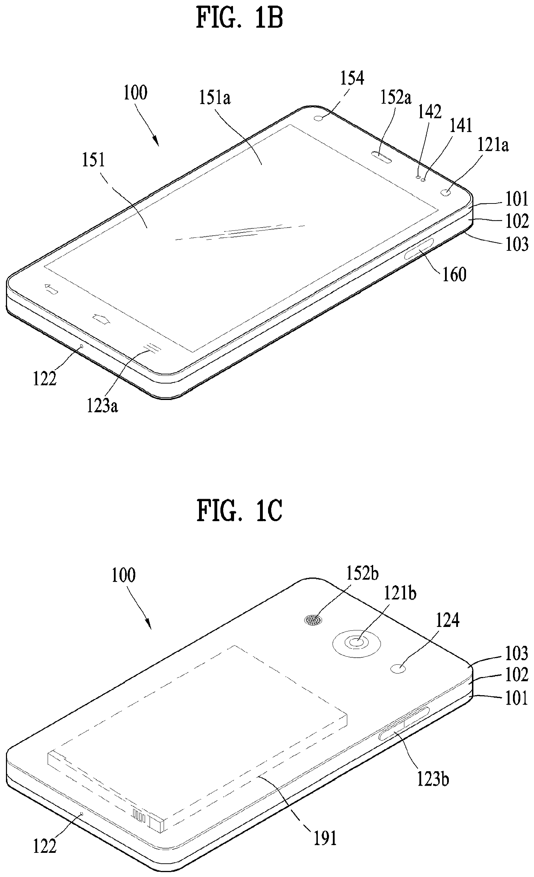

A mobile terminal 100 can include a display unit 151, a first and second audio output unit 152a/152b, a proximity sensor 141, an illumination sensor 142, an optical output unit 154, a first and a second camera 121a/121b, a first and a second operation unit 123a/123b, a microphone 122, an interface unit 160 and the like. FIGS. 1B and 1C depict certain components as arranged on the mobile terminal. However, alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces. The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display. The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like. The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170. The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. IB illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen. As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds. The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown. The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

Meanwhile, according to an embodiment of the present invention, information processed by a mobile terminal can be displayed using a flexible display. Regarding this, it shall be described in more detail with reference to the attached drawing in the following.

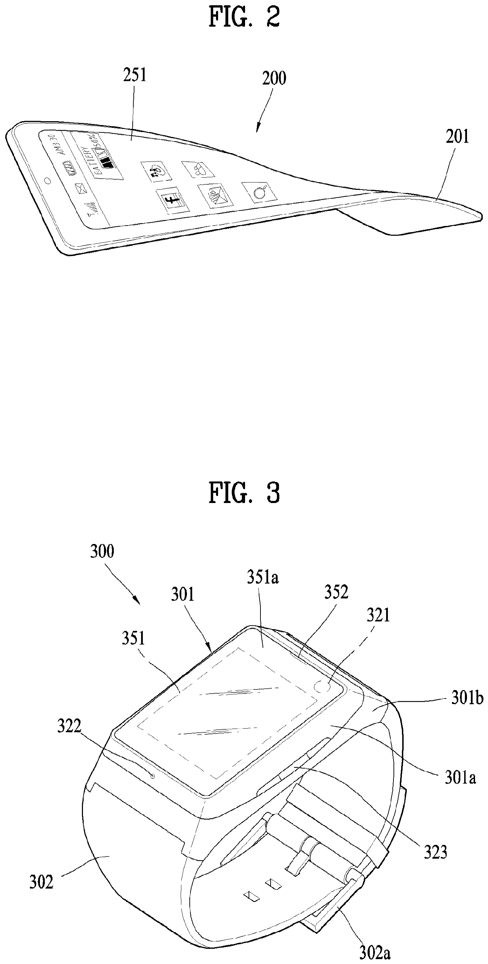

FIG. 2 is a conceptual view of a deformable mobile terminal according to an alternative embodiment of the present invention. In this figure, mobile terminal 200 is shown having display unit 251, which is a type of display that is deformable by an external force. This deformation, which includes display unit 251 and other components of mobile terminal 200, may include any of curving, bending, folding, twisting, rolling, and combinations thereof. The deformable display unit 251 may also be referred to as a "flexible display unit." In some implementations, the flexible display unit 251 may include a general flexible display, electronic paper (also known as e-paper), and combinations thereof. In general, mobile terminal 200 may be configured to include features that are the same or similar to that of mobile terminal 100 of FIGS. 1A-1C .

The flexible display of mobile terminal 200 is generally formed as a lightweight, non-fragile display, which still exhibits characteristics of a conventional flat panel display, but is instead fabricated on a flexible substrate which can be deformed as noted previously. The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When the flexible display unit 251 is not deformed (for example, in a state with an infinite radius of curvature and referred to as a first state), a display region of the flexible display unit 251 includes a generally flat surface. When the flexible display unit 251 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized so a light emission of each unit pixel (sub-pixel) arranged in a matrix configuration is controlled independently. The unit pixel denotes an elementary unit for representing one color.

According to one alternative embodiment, the first state of the flexible display unit 251 may be a curved state (for example, a state of being curved from up to down or from right to left), instead of being in flat state. In this embodiment, when an external force is applied to the flexible display unit 251, the flexible display unit 251 may transition to the second state such that the flexible display unit is deformed into the flat state(or a less curved state) or into a more curved state.

If desired, the flexible display unit 251 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states. One option is to configure the mobile terminal 200 to include a deformation sensor which senses the deforming of the flexible display unit 251. The deformation sensor may be included in the sensing unit 140.

The deformation sensor may be located in the flexible display unit 251 or the case 201 to sense information related to the deforming of the flexible display unit 251. Examples of such information related to the deforming of the flexible display unit 251 may be a deformed direction, a deformed degree, a deformed position, a deformed amount of time, an acceleration that the deformed flexible display unit 251 is restored, and the like. Other possibilities include most any type of information which can be sensed in response to the curving of the flexible display unit or sensed while the flexible display unit 251 is transitioning into, or existing in, the first and second states.

In some embodiments, controller 180 or other component can change information displayed on the flexible display unit 251, or generate a control signal for controlling a function of the mobile terminal 200, based on the information related to the deforming of the flexible display unit 251. Such information is typically sensed by the deformation sensor.

The mobile terminal 200 is shown having a case 201 for accommodating the flexible display unit 251. The case 201 can be deformable together with the flexible display unit 251, taking into account the characteristics of the flexible display unit 251. A battery located in the mobile terminal 200 may also be deformable in cooperation with the flexible display unit 261, taking into account the characteristic of the flexible display unit 251. One technique to implement such a battery is to use a stack and folding method of stacking battery cells.

The deformation of the flexible display unit 251 not limited to perform by an external force. For example, the flexible display unit 251 can be deformed into the second state from the first state by a user command, application command, or the like. In accordance with still further embodiments, a mobile terminal may be configured as a device which is wearable on a human body. Such devices go beyond the usual technique of a user grasping the mobile terminal using their hand. Examples of the wearable device include a smart watch, a smart glass, a head mounted display (HMD), and the like.

A typical wearable device can exchange data with (or cooperate with) another mobile terminal 100. In such a device, the wearable device generally has functionality that is less than the cooperating mobile terminal. For instance, the short-range communication module 114 of a mobile terminal 100 may sense or recognize a wearable device that is near-enough to communicate with the mobile terminal. In addition, when the sensed wearable device is a device which is authenticated to communicate with the mobile terminal 100, the controller 180 can transmit data processed in the mobile terminal 100 to the wearable device via the short-range communication module 114, for example. Hence, a user of the wearable device can use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

FIG. 3 is a perspective view illustrating one example of a watch-type mobile terminal 300 in accordance with another exemplary embodiment. As illustrated in FIG. 3, the watch-type mobile terminal 300 includes a main body 301 with a display unit 351 and a band 302 connected to the main body 301 to be wearable on a wrist. In general, mobile terminal 300 may be configured to include features that are the same or similar to that of mobile terminal 100 of FIGS. 1A-1C .

The main body 301 may include a case having a certain appearance. As illustrated, the case may include a first case 301a and a second case 301b cooperatively defining an inner space for accommodating various electronic components. Other configurations are possible. For instance, a single case may alternatively be implemented, with such a case being configured to define the inner space, thereby implementing a mobile terminal 300 with a uni-body.

The watch-type mobile terminal 300 can perform wireless communication, and an antenna for the wireless communication can be installed in the main body 301. The antenna may extend its function using the case. For example, a case including a conductive material may be electrically connected to the antenna to extend a ground area or a radiation area.

The display unit 351 is shown located at the front side of the main body 301 so that displayed information is viewable to a user. In some embodiments, the display unit 351 includes a touch sensor so that the display unit can function as a touch screen. As illustrated, window 351a is positioned on the first case 301a to form a front surface of the terminal body together with the first case 301a.

The illustrated embodiment includes audio output module 352, a camera 321, a microphone 322, and a user input unit 323 positioned on the main body 301. When the display unit 351 is implemented as a touch screen, additional function keys may be minimized or eliminated. For example, when the touch screen is implemented, the user input unit 323 may be omitted.

The band 302 is commonly worn on the user's wrist and may be made of a flexible material for facilitating wearing of the device. As one example, the band 302 may be made of fur, rubber, silicon, synthetic resin, or the like. The band 302 may also be configured to be detachable from the main body 301. Accordingly, the band 302 may be replaceable with various types of bands according to a user's preference. In one configuration, the band 302 may be used for extending the performance of the antenna. For example, the band may include therein a ground extending portion electrically connected to the antenna to extend a ground area.

The band 302 may include fastener 302a. The fastener 302a may be implemented into a buckle type, a snap-fit hook structure, a Velcro® type, or the like, and include a flexible section or material. The drawing illustrates an example that the fastener 302a is implemented using a buckle.

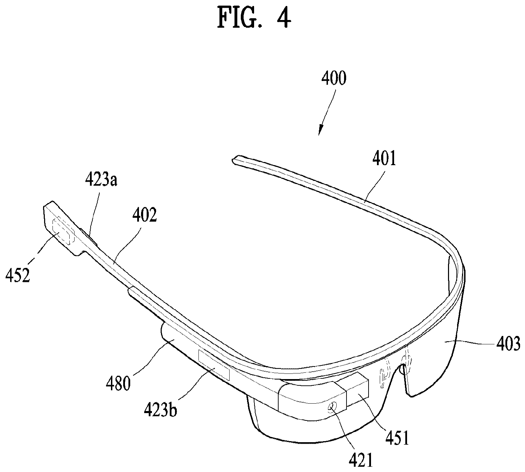

FIG. 4 is a perspective view illustrating one example of a glass-type mobile terminal 400 according to another exemplary embodiment. The glass-type mobile terminal 400 can be wearable on a head of a human body and provided with a frame (case, housing, etc.) therefor. The frame may be made of a flexible material to be easily worn. The frame of mobile terminal 400 is shown having a first frame 401 and a second frame 402, which can be made of the same or different materials. In general, mobile terminal 400 may be configured to include features that are the same or similar to that of mobile terminal 100 of FIGS. 1A-1C.

The frame may be supported on the head and defines a space for mounting various components. As illustrated, electronic components, such as a control module 480, an audio output module 452, and the like, may be mounted to the frame part. Also, a lens 403 for covering either or both of the left and right eyes may be detachably coupled to the frame part. The control module 480 controls various electronic components disposed in the mobile terminal 400. The control module 480 may be understood as a component corresponding to the aforementioned controller 180. FIG. 4 illustrates that the control module 480 is installed in the frame part on one side of the head, but other locations are possible.

The display unit 451 may be implemented as a head mounted display (HMD). The HMD refers to display techniques by which a display is mounted to a head to show an image directly in front of a user's eyes. In order to provide an image directly in front of the user's eyes when the user wears the glass-type mobile terminal 400, the display unit 451 may be located to correspond to either or both of the left and right eyes. FIG. 4 illustrates that the display unit 451 is located on a portion corresponding to the right eye to output an image viewable by the user's right eye.

The display unit 451 may project an image into the user's eye using a prism. Also, the prism may be formed from optically transparent material such that the user can view both the projected image and a general visual field (a range that the user views through the eyes) in front of the user. In such a manner, the image output through the display unit 451 may be viewed while overlapping with the general visual field. The mobile terminal 400 may provide an augmented reality (AR) by overlaying a virtual image on a realistic image or background using the display.

The camera 421 may be located adjacent to either or both of the left and right eyes to capture an image. Since the camera 421 is located adjacent to the eye, the camera 421 can acquire a scene that the user is currently viewing. The camera 421 may be positioned at most any location of the mobile terminal. In some embodiments, multiple cameras 421 may be utilized. Such multiple cameras 421 may be used to acquire a stereoscopic image.

The glass-type mobile terminal 400 may include user input units 423a and 423b, which can each be manipulated by the user to provide an input. The user input units 423a and 423b may employ techniques which permit input via a tactile input. Typical tactile inputs include a touch, push, or the like. The user input units 423a and 423b are shown operable in a pushing manner and a touching manner as they are located on the frame part and the control module 480, respectively.

If desired, mobile terminal 400 may include a microphone which processes input sound into electric audio data, and an audio output module 452 for outputting audio. The audio output module 452 may be configured to produce audio in a general audio output manner or an osteoconductive manner. When the audio output module 452 is implemented in the osteoconductive manner, the audio output module 452 may be closely adhered to the head when the user wears the mobile terminal 400 and vibrate the user's skull to transfer sounds.

A communication system which is operable with the variously described mobile terminals will now be described in more detail. Such a communication system may be configured to utilize any of a variety of different air interfaces and/or physical layers. Examples of such air interfaces utilized by the communication system include Frequency Division Multiple Access (FDMA), Time Division Multiple Access (TDMA), Code Division Multiple Access (CDMA), Universal Mobile Telecommunications System (UMTS) (including, Long Term Evolution (LTE), LTE-A (Long Term Evolution-Advanced)), Global System for Mobile Communications (GSM), and the like.

By way of a non-limiting example only, further description will relate to a CDMA communication system, but such teachings apply equally to other system types including a CDMA wireless communication system as well as OFDM(Orthogonal Frequency Division Multiplexing) wireless communication system.

A CDMA wireless communication system generally includes one or more mobile terminals (MT or User Equipment, UE) 100, one or more base stations (BSs, NodeB, or evolved NodeB), one or more base station controllers (BSCs), and a mobile switching center (MSC). The MSC is configured to interface with a conventional Public Switched Telephone Network (PSTN) and the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omni-directional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites.

A broadcasting transmitter (BT) transmits a broadcast signal to the mobile terminals 100 operating within the system. The broadcast receiving module 111 of FIG. 1A is typically configured inside the mobile terminal 100 to receive broadcast signals transmitted by the BT. Global Positioning System (GPS) satellites for locating the position of the mobile terminal 100, for example, may cooperate with the CDMA wireless communication system. Useful position information may be obtained with greater or fewer satellites than two satellites. It is to be appreciated that other types of position detection technology, (i.e., location technology that may be used in addition to or instead of GPS location technology) may alternatively be implemented. If desired, at least one of the GPS satellites may alternatively or additionally be configured to provide satellite DMB transmissions.

The location information module 115 is generally configured to detect, calculate, or otherwise identify a position of the mobile terminal. As an example, the location information module 115 may include a Global Position System (GPS) module, a Wi-Fi module, or both. If desired, the location information module 115 may alternatively or additionally function with any of the other modules of the wireless communication unit 110 to obtain data related to the position of the mobile terminal.

A typical GPS module 115 can measure an accurate time and distance from three or more satellites, and accurately calculate a current location of the mobile terminal according to trigonometry based on the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites. Furthermore, the GPS module can acquire speed information in real time to calculate a current position. Sometimes, accuracy of a measured position may be compromised when the mobile terminal is located in a blind spot of satellite signals, such as being located in an indoor space. In order to minimize the effect of such blind spots, an alternative or supplemental location technique, such as Wi-Fi Positioning System (WPS), may be utilized.

The Wi-Fi positioning system (WPS) refers to a location determination technology based on a wireless local area network (WLAN) using Wi-Fi as a technology for tracking the location of the mobile terminal 100. This technology typically includes the use of a Wi-Fi module in the mobile terminal 100 and a wireless access point for communicating with the Wi-Fi module. The Wi-Fi positioning system may include a Wi-Fi location determination server, a mobile terminal, a wireless access point (AP) connected to the mobile terminal, and a database stored with wireless AP information.

The mobile terminal connected to the wireless AP may transmit a location information request message to the Wi-Fi location determination server. The Wi-Fi location determination server extracts the information of the wireless AP connected to the mobile terminal 100, based on the location information request message (or signal) of the mobile terminal 100. The information of the wireless AP may be transmitted to the Wi-Fi location determination server through the mobile terminal 100, or may be transmitted to the Wi-Fi location determination server from the wireless AP.

The information of the wireless AP extracted based on the location information request message of the mobile terminal 100 may include one or more of media access control (MAC) address, service set identification (SSID), received signal strength indicator (RSSI), reference signal received Power(RSRP), reference signal received quality(RSRQ), channel information, privacy, network type, signal strength, noise strength, and the like.

The Wi-Fi location determination server may receive the information of the wireless AP connected to the mobile terminal 100 as described above, and may extract wireless AP information corresponding to the wireless AP connected to the mobile terminal from the preestablished database. The information of any wireless APs stored in the database may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like. In order to remove wireless APs provided using a mobile AP or an illegal MAC address during a location determining process, the Wi-Fi location determination server may extract only a predetermined number of wireless AP information in order of high RSSI.

Then, the Wi-Fi location determination server may extract (analyze) location information of the mobile terminal 100 using at least one wireless AP information extracted from the database. A method for extracting (analyzing) location information of the mobile terminal 100 may include a Cell-ID method, a fingerprint method, a trigonometry method, a landmark method, and the like.

The Cell-ID method is used to determine a position of a wireless AP having the largest signal strength, among peripheral wireless AP information collected by a mobile terminal, as a position of the mobile terminal. The Cell-ID method is an implementation that is minimally complex, does not require additional costs, and location information can be rapidly acquired. However, in the Cell-ID method, the precision of positioning may fall below a desired threshold when the installation density of wireless APs is low.

The fingerprint method is used to collect signal strength information by selecting a reference position from a service area, and to track a position of a mobile terminal using the signal strength information transmitted from the mobile terminal based on the collected information. In order to use the fingerprint method, it is common for the characteristics of radio signals to be pre-stored in the form of a database.

The trigonometry method is used to calculate a position of a mobile terminal based on a distance between coordinates of at least three wireless APs and the mobile terminal. In order to measure the distance between the mobile terminal and the wireless APs, signal strength may be converted into distance information, Time of Arrival (ToA), Time Difference of Arrival (TDoA), Angle of Arrival (AoA), or the like may be taken for transmitted wireless signals.

The landmark method is used to measure a position of a mobile terminal using a known landmark transmitter. In addition to these position location methods, various algorithms may be used to extract (analyze) location information of a mobile terminal. Such extracted location information may be transmitted to the mobile terminal 100 through the Wi-Fi location determination server, thereby acquiring location information of the mobile terminal 100.

The mobile terminal 100 can acquire location information by being connected to at least one wireless AP. The number of wireless APs required to acquire location information of the mobile terminal 100 may be variously changed according to a wireless communication environment within which the mobile terminal 100 is positioned. As previously described with regard to FIG. 1A, the mobile terminal may be configured to include short-range communication techniques such as Bluetooth™, Radio Frequency Identification (RFID), Infrared Data Association (IrDA), Ultra Wideband (UWB), ZigBee, Near Field Communication (NFC), Wireless USB (Wireless Universal Serial Bus), and the like.

A typical NFC module provided at the mobile terminal supports short-range wireless communication, which is a non-contactable type of communication between mobile terminals and generally occurs within about 10 cm. The NFC module may operate in one of a card mode, a reader mode, or a P2P mode. The mobile terminal 100 may further include a security module for storing card information, in order to operate the NFC module in a card mode. The security module may be a physical medium such as Universal Integrated Circuit Card (UICC) (e.g., a Subscriber Identification Module (SIM) or Universal SIM (USIM)), a secure micro SD and a sticker, or a logical medium (e.g., embedded Secure Element (SE)) embedded in the mobile terminal. Single Wire Protocol (SWP)-based data exchange may be performed between the NFC module and the security module.

When the NFC module operates in a card mode, the mobile terminal may transmit card information on a general IC card to the outside. More specifically, if a mobile terminal having card information on a payment card (e. g, a credit card or a bus card) approaches a card reader, a short-range mobile payment may be executed. As another example, if a mobile terminal which stores card information on an entrance card approaches an entrance card reader, an entrance approval procedure may start. A card such as a credit card, a traffic card, or an entrance card may be included in the security module in the form of applet, and the security module may store card information on the card mounted therein. Card information for a payment card may include any of a card number, a remaining amount and usage history, and the like. Card information of an entrance card may include any of a user's name, a user's number (e.g., undergraduate number or staff number), an entrance history, and the like.

When the NFC module operates in a reader mode, the mobile terminal can read data from an external tag. The data received from the external tag by the mobile terminal may be coded into the NFC Data Exchange Format defined by the NFC Forum. The NFC Forum generally defines four record types. More specifically, the NFC Forum defines four Record Type Definitions (RTDs) such as smart poster, text, Uniform Resource Identifier (URI), and general control. If the data received from the external tag is a smart poster type, the controller may execute a browser (e.g., Internet browser). If the data received from the external tag is a text type, the controller may execute a text viewer. If the data received from the external tag is a URI type, the controller may execute a browser or originate a call. If the data received from the external tag is a general control type, the controller may execute a proper operation according to control content.

In some cases in which the NFC module operates in a P2P(Peer-to-Peer) mode, the mobile terminal can execute P2P communication with another mobile terminal. In this instance, Logical Link Control Protocol (LLCP) may be applied to the P2P communication. For P2P communication, connection may be generated between the mobile terminal and another mobile terminal. This connection may be categorized as a connectionless mode which ends after one packet is switched, and a connection-oriented mode in which packets are switched consecutively. For a typical P2P communication, data such as an electronic type name card, address information, a digital photo and a URL, a setup parameter for Bluetooth connection, Wi-Fi connection, etc. may be switched. The P2P mode can be effectively utilized in switching data of a small capacity, because an available distance for NFC communication is relatively short.

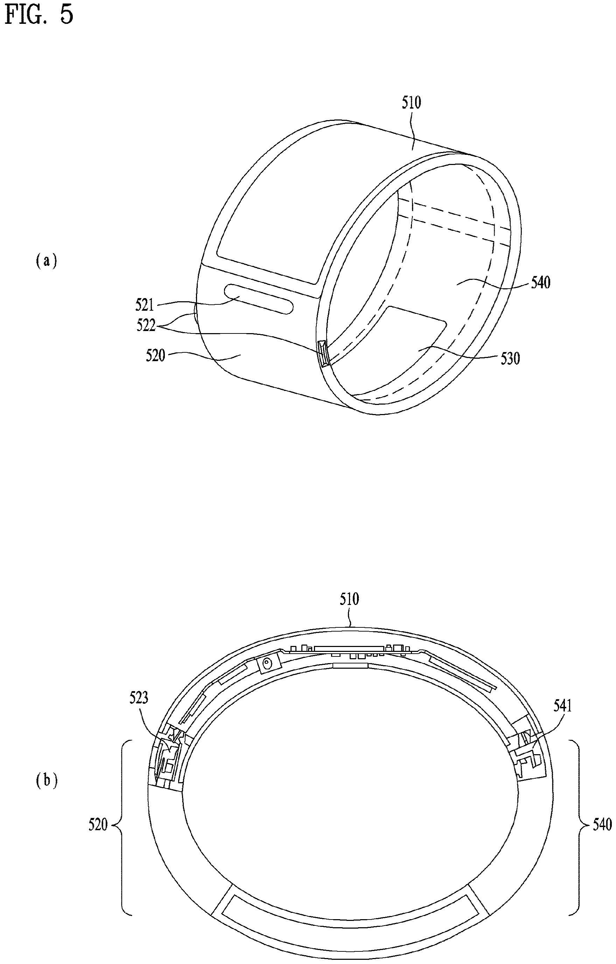

Further preferred embodiments will be described in more detail with reference to additional drawing figures. It is understood by those skilled in the art that the present features can be embodied in several forms without departing from the characteristics thereof. In particular, FIG. 5 is a diagram illustrating an example of a watch-type mobile terminal related to an embodiment of the present invention. More specifically, FIG. 5 (a) is a perspective diagram illustrating a watch-type mobile terminal (hereinafter, mobile terminal) related to an embodiment of the present invention and FIG. 5 (b) is a side view of a watch-type mobile terminal related to an embodiment of the present invention.

First of all, according to an embodiment of the present invention, a mobile terminal can include a display unit 510, a first connection unit 520, a battery 530 and a second connection unit 540. In addition, the mobile terminal can be configured by a bangle type or a band type.

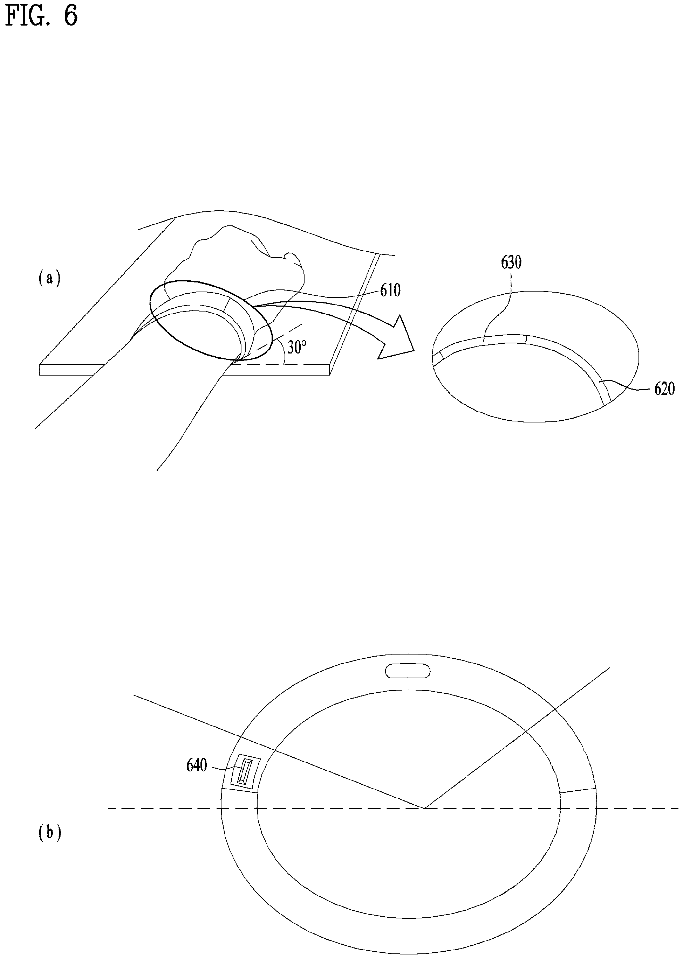

The display unit 510 can display visual information such as digital contents. In addition, the display unit 510 can include a first display area and a second display area. This will be described later in FIG. 6. As shown in FIG. 5 (b), the display unit 510 can be configured by a curved display of an oval form. This is because a wrist of a user on which a mobile terminal to be worn is an oval form instead of a circle form. Further, the display unit 510 can be configured by a LCD, a LED, an OLED, or an e-paper screen. The display unit 510 shown in FIG. 5 can be implemented by a display unit 151 mentioned earlier in FIG. 1A. The display unit 151 can be implemented by a touch screen by including a sensing unit configured to sense an input signal. In this instance, a touch sensing unit of FIG. 5 can be implemented by the sensing unit 140 mentioned earlier in FIG. 1A.

The first connection unit 520 may correspond to a part connected with one side of the display unit 510. For example, the first connection unit 520 can be connected with a first display area of the display unit 510. In addition, the first connection unit 520 is positioned at the inside of an arm of a user wearing a mobile terminal and can include a fingerprint sensing unit 521, a hardware key 522 and a charging unit 523. In this instance, the fingerprint sensing unit 521 can sense a fingerprint of a user. The hardware key 522 may correspond to a pair of hardware buttons configured to connect the first connection unit 520 and the display unit 510 with each other or a pair of hardware buttons configured to release connection between the first connection unit 520 and the display unit 510. In addition, the charging unit 523 corresponds to a USB charging unit and can be provided when the connection between the first connection unit 520 and the display unit 510 is released.

The battery 530 is positioned between the first connection unit 520 and the second connection unit 530 and can supply power to a mobile terminal. In addition, as shown in FIG. 5, the battery 530 is positioned at an opposite side of the display unit 510 and can be positioned at the center. This is intended to set stability of a wrist of a user and align a center of gravity. The battery 530 can be implemented by a power supply unit 190 mentioned earlier in FIG. 1A.

The second connection unit 540 may correspond to a part connected with another side of the display unit 510. For example, the second connection unit 540 can be connected with a second display area of the display unit 510. In particular, the second connection unit 540 is positioned at the outside of an arm wearing a mobile terminal and can include a communication unit 541. The communication unit 541 can include an NFC module, a Wi-Fi module and a Bluetooth module. The communication unit 541 shown in FIG. 5 can be implemented by a wireless communication unit mentioned earlier in FIG. 1A.

Next, FIG. 6 is a diagram illustrating an example of a display unit of a mobile terminal related to an embodiment of the present invention. More specifically, FIG. 6 (a) shows a position of a first display area and a position of a second display area based on a form and inclination of a wrist of a user, and FIG. 6 (b) shows an angle occupied by a display unit of a mobile terminal.

In general. As shown in FIG. 6 (a), when an arm of a user is naturally laid on a table, an angle formed by a wrist of the user and the table may correspond to about 30 degrees. In this instance, if the inside of the wrist completely contacts the table, it may be assumed as 0 degrees. On the contrary, if the outside of the wrist is vertical to the table, it may be assumed as 90 degrees. Hence, as shown in FIG. 6(a), a display unit 610 of a mobile terminal can be arranged at a center and a side of the mobile terminal at the same time by being stretched. In addition, as shown in FIG. 6 (b), the display unit 610 of the mobile terminal can be firstly positioned at an upper side of the first connection unit 640 mentioned earlier in FIG. 5. The display unit 610 can be arranged at a position between 30 degrees and 150 degrees based on a center of the mobile terminal.

Further, as shown in the right side of FIG. 6 (a), the display unit 610 of the mobile terminal can be divided into a first display area 620, which is relatively easy to use by a user, and a second display area 630, which is relatively difficult to use. For the second display area 630, since the second display area is positioned at an area at which a gaze of a user is difficult to reach compared to the first display area 620, the user's frequency of use is less. For example, the first display area can be configured by a LED and the second display area 630 can be configured by an E-paper irrespective of the first display area. In addition, for example, the first display area 620 and the second display area 630 can be configured by a LED as an integrated display.

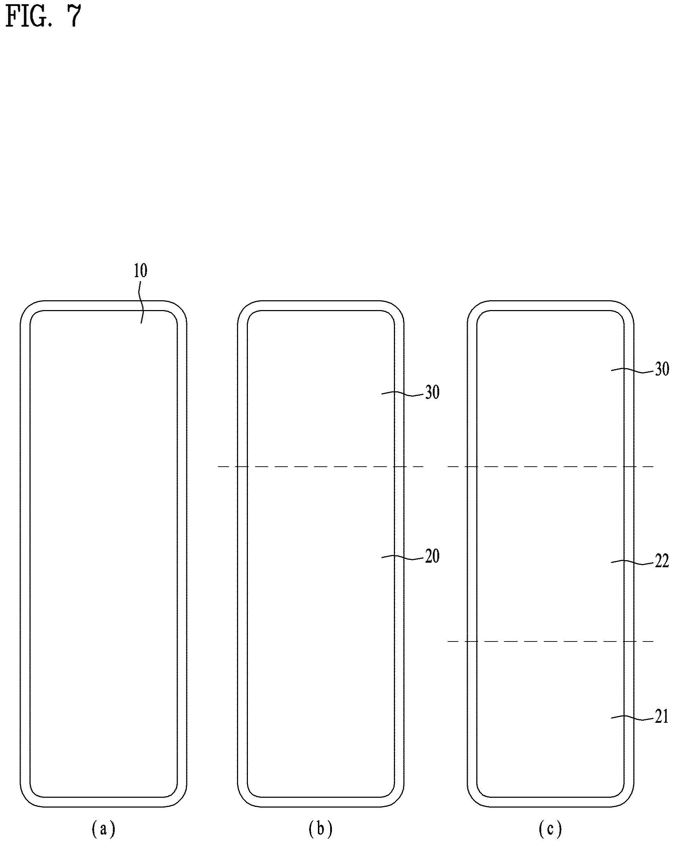

In the following embodiments of FIG. 7 to FIG. 43, operations performed in a mobile terminal can be controlled by the controller 180 mentioned earlier in FIG. 1A. For clarity, it is commonly depicted and explained as the operations are performed or controlled by a mobile terminal 100 in the following description. In particular, FIGS. 7 to 43 show a method of optimally providing content arrangement to a user using a long display unit stretched in horizontal direction or vertical direction according to an embodiment of the present invention.

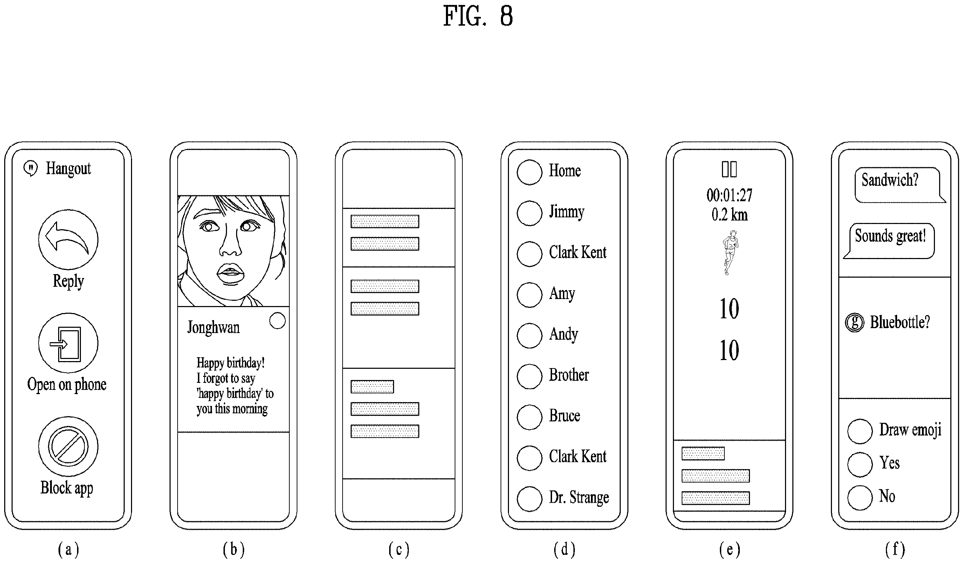

In more detail, FIGS. 7 to 8 show an embodiment of displaying contents on a long display unit stretched in horizontal or vertical direction. That is, FIG. 7 is a diagram illustrating an example of a display unit of a mobile terminal and FIG. 8 is a diagram illustrating an example of displaying contents on a display unit shown in FIG. 7.

As mentioned earlier in FIG. 5 and FIG. 6, a mobile terminal according to an embodiment of the present invention can include a long display unit stretched in horizontal or vertical direction. For example, a longer side among a horizontal side and a vertical side of the display unit may correspond to a screen of a length longer as much as twice of a length of a shorter side among the horizontal side and the vertical side of the display unit. Hence, compared to a legacy watch-type mobile terminal, various contents can be displayed on the display unit at the same time.

As shown in FIG. 7 (a), the mobile terminal can display single content on the entire display unit as a single display area 10. For example, referring to FIG. 8 (a), the mobile terminal can display contents related to a response function for a message on the display unit at the same time. In addition, for example, referring to FIG. 8 (b), the mobile terminal can display a message and an image included in the message on the display unit at the same time. In addition, for example, referring to FIG. 8 (c), the mobile terminal can display a plurality of document contents or a plurality of messages on the display unit at the same time. Further, as shown in FIG. 8 (d), the mobile terminal can display a plurality of contacts on the display unit at the same time.

Subsequently, as shown in FIG. 7 (b), the mobile terminal can display contents on the display unit by dividing the display unit into two areas. In particular, the mobile terminal can distinguish a first display area 20 from a second display area 30 in the display unit. For example, the first display area 20 may correspond to an area more closely arranged to a user. In one embodiment, the mobile terminal displays a notification for a new event on the first display area 20 and can display a notification for a previously occurred event on the second display area 30.

In another embodiment, when displaying two contents at the same time, the mobile terminal displays long content on the first display area 20 and can display short content on the second display area 30. In another embodiment, when displaying two contents at the same time, the mobile terminal displays content of high priority on the first display area 20 and can display content of low priority on the second display area 30. In this instance, the priority of the content can be configured by a user or a device itself.

Subsequently, as shown in FIG. 7 (c), the mobile terminal can display contents on the display unit by dividing the display unit into three areas. In particular, the mobile terminal can divide the display unit into a bottom part 21 of a first display area, an upper part 22 of the first display area and the second display area 30. For example, the bottom part 21 of the first display area can correspond to an area most closely arranged to a user. In one embodiment, the mobile terminal can display three contents different from each other on each of the display areas, respectively.

For example, referring to FIG. 8 (e), the mobile terminal can display document content on the bottom part 21 of the first display area, display time content on the upper part 22 of the first display area and display exercise content on the second display area 30. In another embodiment, the mobile terminal can differently display various contents included in an application on each of the display areas. For example, as shown in FIG. 8 (f), the mobile terminal displays a message list on the second display area 30, displays a voice recognition icon for message response on the upper part 22 of the first display area 20 and can display a message response icon on the bottom part 21 of the first display area 20 in a message application. Meanwhile, a method of using the display unit of the present invention is not limited by the embodiments of FIG. 7 and FIG. 8. For example, the display unit can be used by dividing the display unit in various sizes.

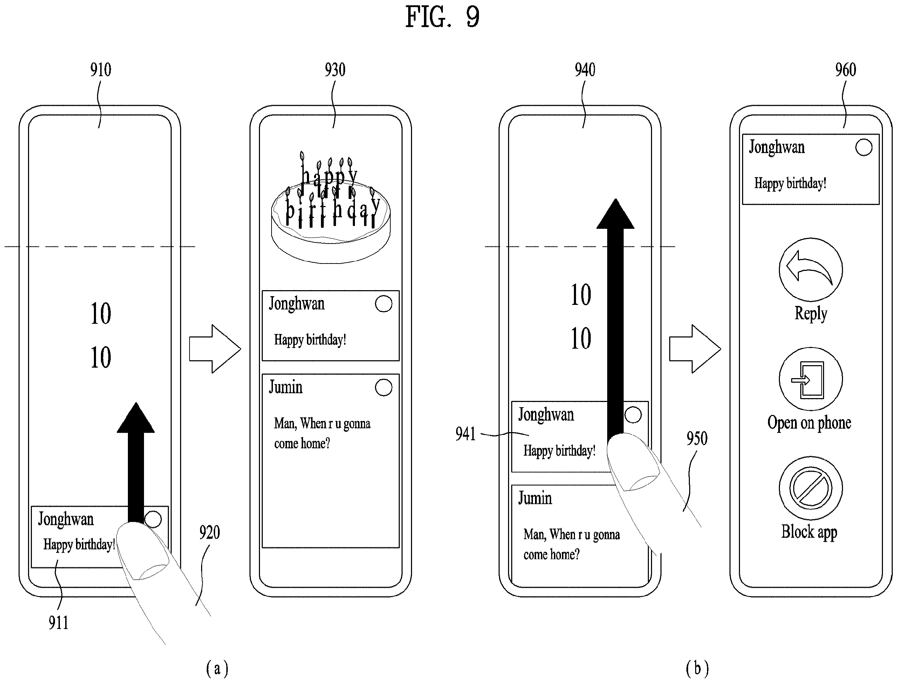

Next, FIGS. 9 to 15 show embodiments of the display unit of the present invention displaying contents on the first display area or the second display area according to an input signal. As mentioned in the foregoing description, it was difficult to display contents due to the small size of a display unit of a legacy watch-type mobile terminal. On the contrary, the embodiments of FIG. 9 to 15 illustrating displaying various contents at the same time using a long display.

In particular, FIG. 9 is a diagram illustrating an example of displaying contents according to an input signal input on a display unit of a mobile terminal related to an embodiment of the present invention. More specifically, embodiments in FIG. 9 (a) and FIG. 9 (b) show an embodiment of displaying contents different from each other by a touch input of an identical type on a home screen.

In one embodiment, in relation to FIG. 9 (a), the mobile terminal can sense a first input signal 920 for a notification 911 displayed on a home screen 910. For example, the home screen 910 of the mobile terminal can be configured to make a watch screen to be displayed at the center of the display unit. In addition, for example, a state of displaying the home screen 910 of the mobile terminal can correspond to an unlock state or a lock state of the mobile terminal. In addition, if an event occurs in a state of displaying the home screen 910 of the mobile terminal, a notification for the occurred event can be configured to be displayed on a bottom part of the first display area. For example, as shown in the left side of FIG. 9 (a), if the occurred event corresponds to a message, the mobile terminal can display a message notification 911 on the bottom part of the first display area. The first input signal 920 corresponds to a drag touch input or a flicking touch input in upper direction. The first input signal can correspond to a drag touch input starting at a position corresponding to the notification 911 and ending at a point of the first display area.

Subsequently, the mobile terminal can display a notification list including the notification 911 according to the first input signal 920. In this instance, the mobile terminal can display the list 930 by executing an application corresponding to the notification. More specifically, as shown in the right side of FIG. 9 (a), the mobile terminal executes a message application 930 and can display a list of received messages.

In another embodiment, in relation to FIG. 9 (b), the mobile terminal can sense a second input signal 950 for a notification 941 displayed on a home screen 940. For example, the second input signal 950 corresponds to a drag touch input or a flicking touch input in upper direction. The second input signal can correspond to a drag touch input starting at a position corresponding o the notification 940 and ending at a point of the second display area.

Subsequently, the mobile terminal can execute an application 960 corresponding to the notification 941. More specifically, as shown in the right of FIG. 9 (b), the mobile terminal executes a message application and can display a response option 960 in response to a message on which the second input signal 950 is sensed. In particular, as shown in FIG. 9 (a) and FIG. 9 (b), although a drag touch input or a flicking touch input for a notification is identically sensed on a home screen, the mobile terminal can provide contents different from each other based on a length of the touch input or an area corresponding to a point at which the touch input is finished.

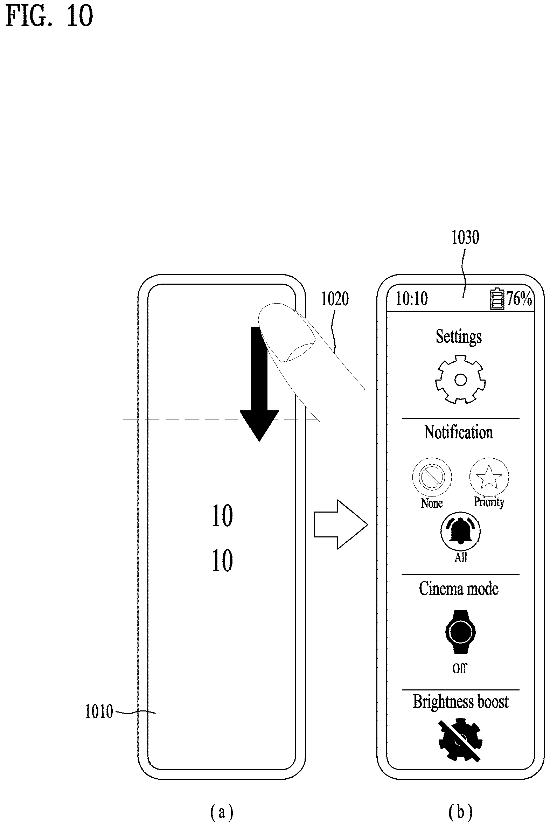

FIG. 10 is a diagram illustrating an example of displaying contents according to an input signal input on a display unit of a mobile terminal related to an embodiment of the present invention. More specifically, FIG. 10 shows an embodiment of displaying a status bar 1030 of the mobile terminal according to an input signal.

As shown in FIG. 10 (a), the mobile terminal can sense a first input signal 1020 input on a home screen 1010. In this instance, the first input signal 1020 corresponds to a drag touch input or a flicking touch input in down direction. The touch input can start at uppermost of the home screen 1010 and may be dragged toward the bottom. Subsequently, the mobile terminal ca display a status bar 1030 according to the first input signal 1020. In this instance, as shown in FIG. 10 (b), the status bar 1030 includes a notification configuration, a camera configuration and the like and is not limited by the configuration depicted in FIG. 10 (b). In relation to this, although various contents were unable to be displayed on the status bar 1030 of a small screen of a legacy smart watch at the same time, since a display unit of the mobile terminal of the present invention is wide enough, various contents can be displayed on the status bar 1030 at the same time.

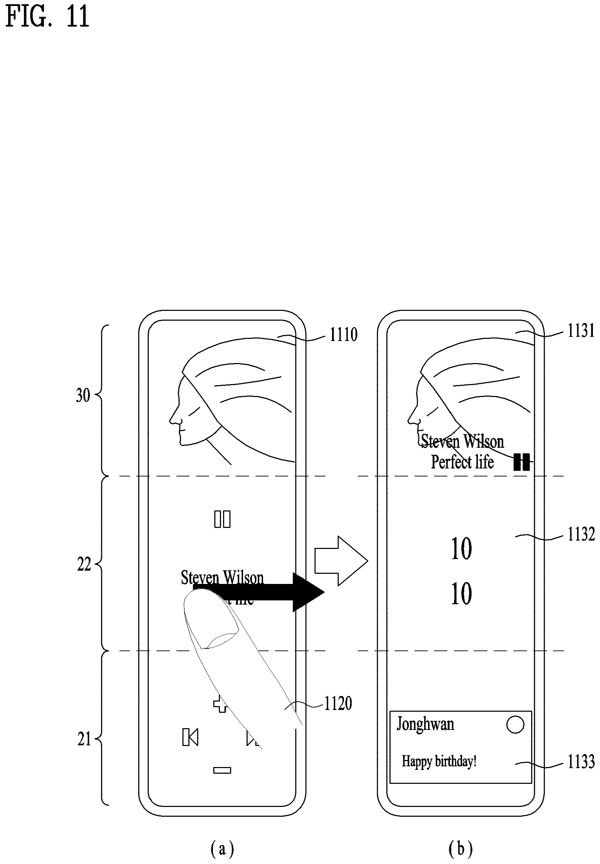

Next, FIG. 11 is a diagram illustrating an example of displaying contents according to an input signal input on a display unit of a mobile terminal related to an embodiment of the present invention. More specifically, FIG. 11 shows an embodiment of displaying three contents or applications at the same time according to an input signal.

As shown in FIG. 11 (a), the mobile terminal can sense a first input signal 1120 for a music application 1110. In this instance, a control button of the music application is displayed at a bottom part 21 of a first display area, an artist and a title of a song of currently playing music are displayed at an upper part 22 of the first display area and an image related to the currently playing music can be displayed at a second display area 30. For example, the first input signal 1120 can correspond to a drag touch input in right direction or a flicking touch input in right direction. In this instance, the first input signal 1120, which is sensed while an application is executed, can correspond to an input signal input to enter a home screen.

Subsequently, as shown in FIG. 11 (b), the mobile terminal can display the home screen according to the first input signal 1120. However, since the mobile terminal enters the home screen while the music application is executing, the mobile terminal can continuously display the music application 1131 on the second display area 30. In addition, the mobile terminal can display a watch content 1132, which is used to be displayed on the home screen, on the upper part 22 of the first display area. In addition, the mobile terminal can display an unidentified notification 1133 on the bottom part 21 of the first display area. In particular, since a size of the display unit according to an embodiment of the present invention is large enough, a user can continuously check currently using contents on the second display area 30 while performing multitasking.

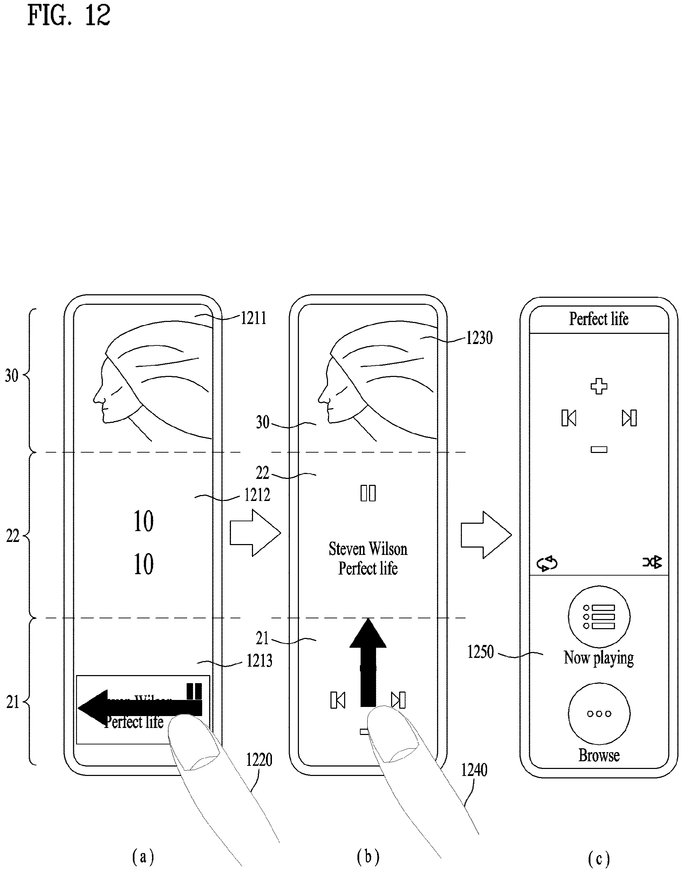

Next, FIG. 12 is a diagram illustrating an example of displaying contents according to an input signal input on a display unit of a mobile terminal related to an embodiment of the present invention. More specifically, FIG. 12 shows an embodiment of entering a music application from a home screen according to an input signal while the music application is executed by multitasking.

As shown in FIG. 12 (a), the mobile terminal can sense a first input signal 1220 on a home screen while a music application is executed by multitasking. In this instance, the home screen can display watch content on an upper part 22 of a first display area. Since the music application is currently executed, an image 1211 related to currently playing music is displayed on a second display area 30 of the home screen and an artist and a title of the currently playing music can be displayed on a bottom part 21 of the first display area. For example, the first input signal 1220 can correspond to a drag touch input in left direction or a flicking touch input in left direction. For example, the first input signal 1220 input on the music application 1211/1213 on the home screen can correspond to a signal input to enter a corresponding application on the home screen.

Subsequently, as shown in FIG. 12 (b), the mobile terminal can display a music application 1230 on a whole area of the display unit according to the first input signal 1220. In addition, as shown in FIG. 12 (b), the mobile terminal can sense a second input signal 1240 for the music application 1230. For example, the second input signal 1240 can correspond to a drag touch input in an upper direction or a flicking touch input in upper direction. In this instance, the second input signal 1240 can correspond to a signal for displaying a menu option 1250 of the music application 1230.

Subsequently, as shown in FIG. 12 (c), the mobile terminal can display the menu option 1250 of the music application 1230 according to the second input signal 1240. For example, the menu option 1250 can include a current playback list and an option for entering a home page.

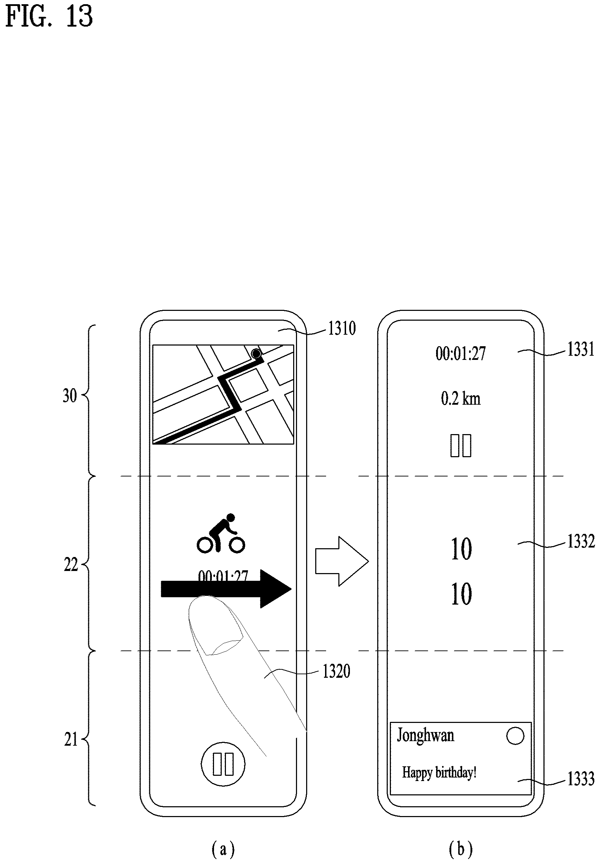

Next, FIG. 13 is a diagram illustrating an example of displaying contents according to an input signal input on a display unit of a mobile terminal related to an embodiment of the present invention. More specifically, FIG. 13 shows an embodiment of entering a home screen according to an input signal which is input while an exercise application is executed.

As shown in FIG. 13 (a), the mobile terminal can sense a first input signal 1320 while an exercise application 1310 is executed. For example, if the exercise application 1310 is executed, an upper part 22 of a first display area displays a type of currently executed exercise and exercise time and a bottom part 21 of the first display area can display an icon for selecting whether to execute the exercise application. In addition, a second display area 30 can display a map indicating a moving position of the currently executed exercise. In addition, for example, the first input signal can correspond to a flicking touch input in right direction or a drag touch input in right direction. In this instance, the first input signal 1320 can correspond to an input signal input to enter the home screen while the application is executed.

Subsequently, as shown in FIG. 13 (b), the mobile terminal can enter the home screen according to the first input signal 1320. In this instance, since the exercise application 1310 is executed by multitasking, the currently executed exercise application 1310 can be displayed on the second display area 30 of the home screen. In addition, an unidentified notification 1333 is displayed on the bottom part 21 of the first display area and the watch content can be displayed on the upper part 22 of the first display area of the home screen.

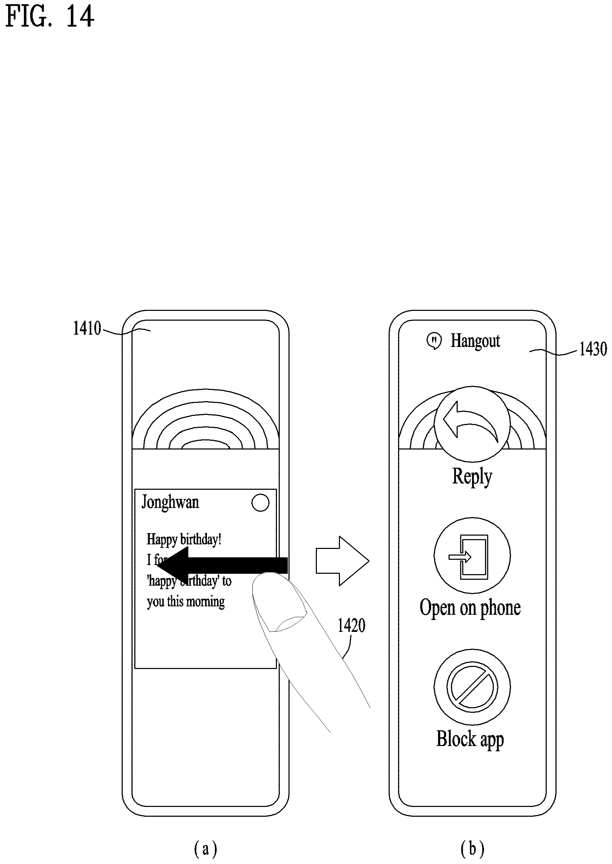

FIG. 14 is a diagram illustrating an example of displaying contents according to an input signal input on a display unit of a mobile terminal related to an embodiment of the present invention. More specifically, FIG. 14 shows an embodiment of displaying a message option according to an input signal while a message application is executed.

As shown in FIG. 14 (a), the mobile terminal can sense a first input signal 1420 while a message application 1410 is executed. In this instance, as shown in FIG. 14 (a), if the message application is executed, a message and an image can be displayed together. For example, a displayed image can correspond to an image received together with the message, a default image displayed in the message application or the like. In addition, for example, the first input signal 1420 can correspond to a drag touch input in the left direction or a flicking touch input in the left direction.

Subsequently, as shown in FIG. 14 (b), the controller 180 can display a response option 1430 according to the first input signal 1420. For example, the message option 1430 can include a response option, an option of executing a message application in an external device paired with the mobile terminal, an option of blocking the message application and the like.

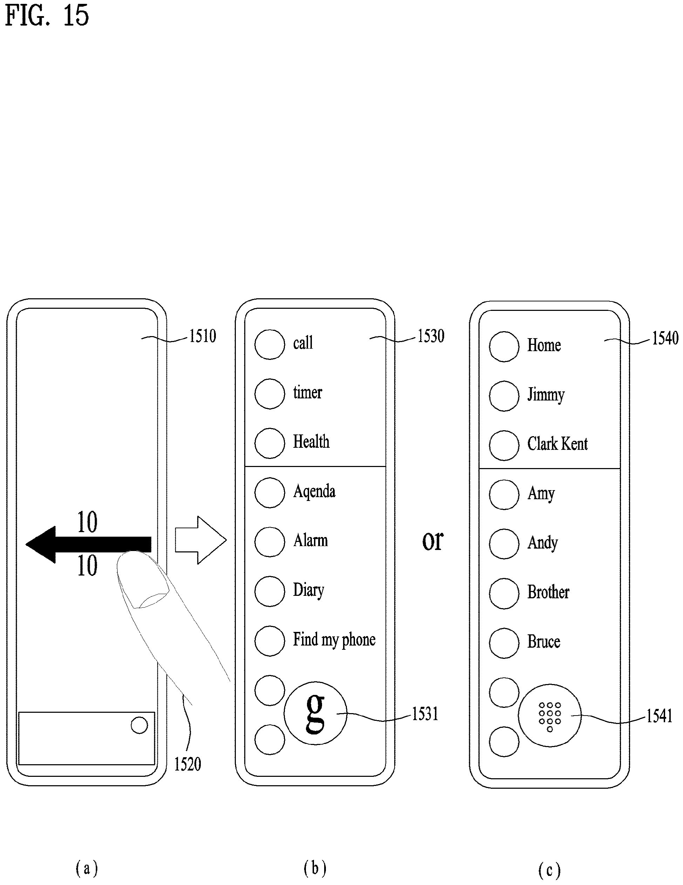

FIG. 15 is a diagram illustrating an example of displaying contents according to an input signal input on a display unit of a mobile terminal related to an embodiment of the present invention. More specifically, FIG. 15 shows an embodiment of displaying an application list or a contact list according to an input signal on a home screen.

As shown in FIG. 15 (a), the mobile terminal can sense an input signal 1520 on a home screen 1510. For example, the first input signal 1520 can correspond to a flicking touch input in left direction or a drag touch input in left direction. Subsequently, the mobile terminal can display an application list 1530 or a contact list 1540 according to the first input signal 1520.

For example, as shown in FIG. 15 (b), the mobile terminal can display the application list 1530 according to the first input signal 1520. In this instance, the mobile terminal can display a recently used application list or a frequently used application list on a second display area. In addition, the mobile terminal can display a pop-up icon 1531 at a bottom part of a first display area.

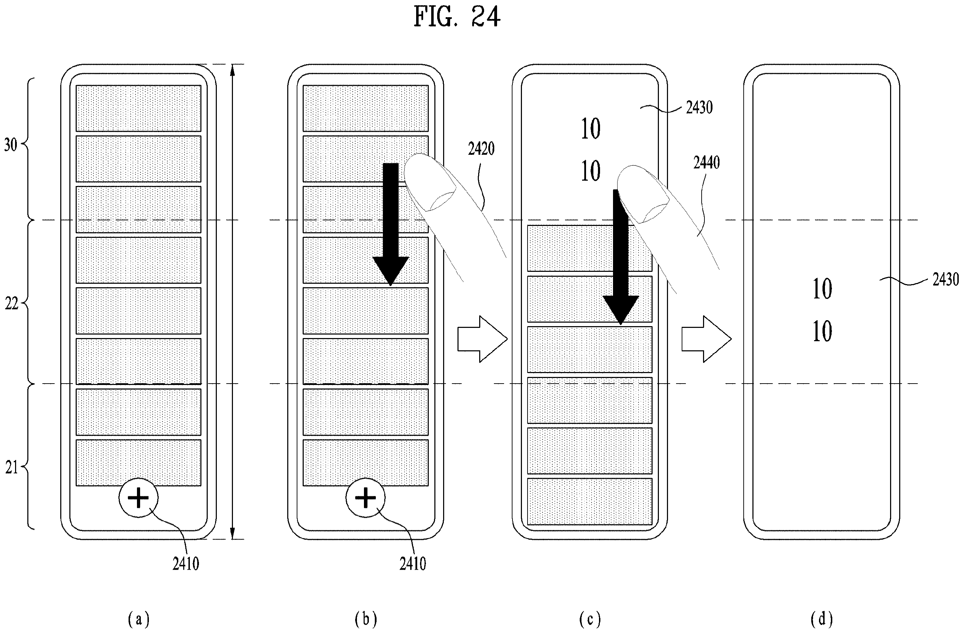

Further, for example, as shown in FIG. 15 (c), the mobile terminal can display the contact list 1540 according to the first input signal 1520. In this instance, the mobile terminal can display a recently used contact or a frequently used contact list on the second display area. In addition, the mobile terminal can display a pop-up icon 1541 at a bottom part of the first display area. The pop-up icon 1531/1541 will be described later with reference to FIG. 24 to FIG. 29.

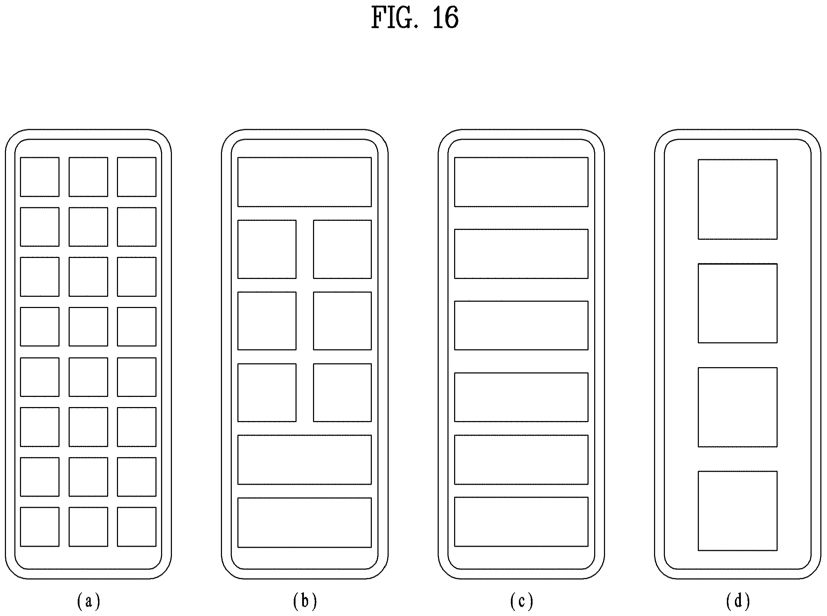

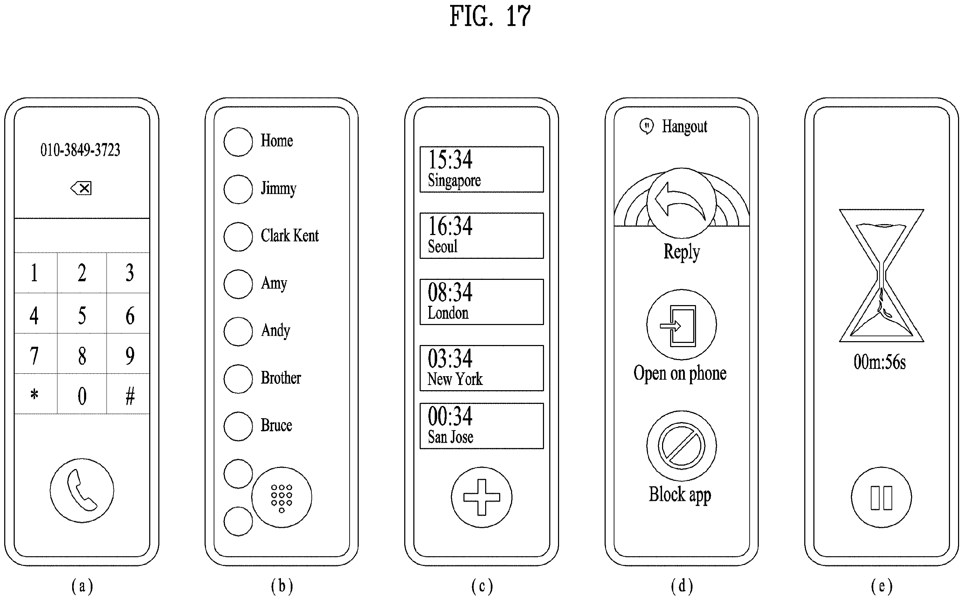

FIGS. 16 and 17 are diagrams illustrating an example of displaying contents on a display unit of a mobile terminal based on a size of an icon. First of all, FIG. 16 shows an embodiment of icons of various sizes displayed on the display unit of the mobile terminal related to an embodiment of the present invention.

As mentioned in the foregoing description, since the display unit of the present invention is configured by a long display unit stretched in horizontal direction or vertical direction, various contents can be displayed on the display unit at the same time according to a size of an icon. In an embodiment, as shown in FIG. 16 (a), the mobile terminal can display icons with the first size. For example, the first size can correspond to a size of 6 mm * 6 mm. In addition, the mobile terminal can display the icons of the first size on the display unit by 8 rows and 3 columns. The icons of the first size are mainly used to display a minute detail. For example, the icons of the first size can be displayed in such a form as a dial pad, a button included in a notification, a control button and the like.

In another embodiment, as shown in FIG. 16 (b) and (c), the mobile terminal can display icons with the second size. For example, the second size can correspond to a size of 8 mm * 8 mm. In addition, as shown in FIG. 16 (b), the mobile terminal can display the icons of the second size on the display unit by 6 rows and 2 columns. In addition, the mobile terminal can display an icon of a size of which two icons of the second size are horizontally added as a single icon. In this instance, as shown in FIG. 16 (c), the mobile terminal can display the icons by 6 rows and 1 column. The icons of the second size are mainly used to display a notification. For example, the icons of the second size can be displayed in such a form as a notification, a list view, a control button and the like.

And, in another embodiment, as shown in FIG. 16 (d), the mobile terminal can display icons with the third size. For example, the third size can correspond to a size of 12 mm * 12 mm. In addition, the mobile terminal can display the icons of the third size on the display unit by 4 rows and 1 column. The icons of the third size can be mainly used for a button indicating a menu option. Meanwhile, an icon of a bigger size or an icon of a smaller size can also be provided as an embodiment of the present invention rather than the aforementioned icons of the first to the third size.

FIG. 17 is a diagram illustrating an example of displaying various contents based on a size of an icon shown in FIG. 16. Further, contents shown in FIG. 17 (a) correspond to a dial pad. In the dial pad, a part indicating a number is represented by the first size mentioned earlier in FIG. 16 and a telephone call icon can be represented by the second size mentioned earlier in FIG. 16. Contents shown in FIG. 17 (b) correspond to a contact list. Each contact of the list can be represented by the first size or a size smaller than the first size and an icon for switching to the dial pad can be represented by the second size mentioned earlier in FIG. 16.

In addition, contents shown in FIG. 17 (c) correspond to World time list. Each list and a time addition icon can be represented by the second size mentioned earlier in FIG. 16. In addition, contents shown in FIG. 17 (d) correspond to a message detail option. Each detail option can be represented by the third size mentioned earlier in FIG. 16. In addition, contents shown in FIG. 17 (e) correspond to a stopwatch. The stopwatch can be represented by a size bigger than the third size mentioned earlier in FIG. 16.

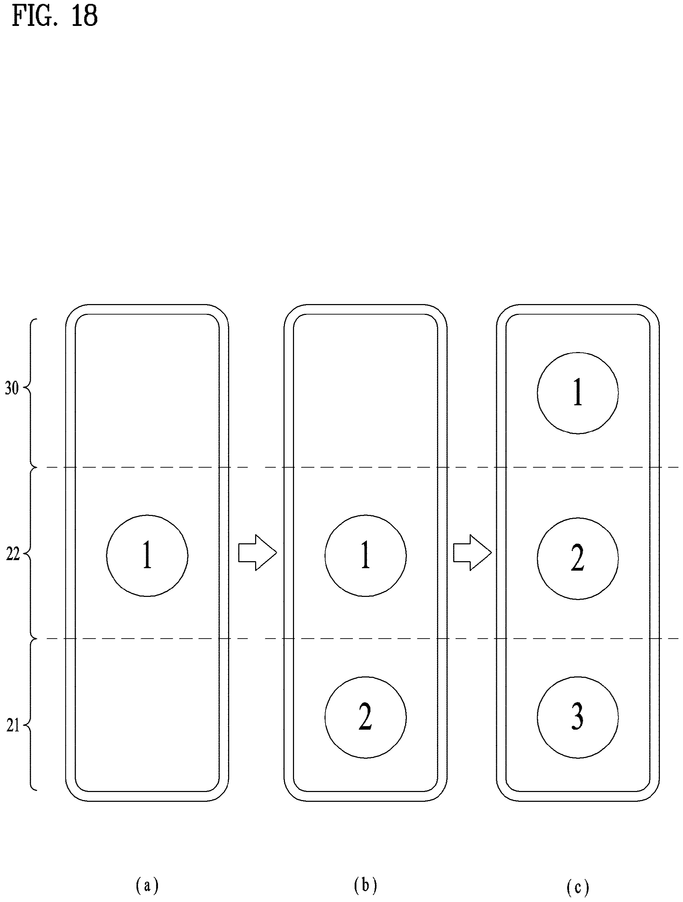

FIGS. 18 to 21 are diagrams illustrating an order of displaying a notification for events in a mobile terminal when a plurality of events occur in the mobile terminal of the present invention. In this instance, the events occurring in the mobile terminal can include an event received from a terminal of an external user, an event occurred in the mobile terminal itself and an event received from an external device of which communication access is established with the mobile terminal. For example, the occurred event can include message reception, alarm, telephone call reception, notification in an application and the like.

FIG. 18 is a diagram illustrating an example of displaying a notification on a display unit when a plurality of events occur in a mobile terminal related to an embodiment of the present invention. As shown in FIG. 18 (a), the mobile terminal can display predetermined content 1 on the display unit irrespective of whether or not an event occurs. More specifically, the mobile terminal can display the predetermined content 1 on a home screen irrespective of whether or not an event occurs in a lock state or an unlock state of the mobile terminal. In this instance, the predetermined content 1 corresponds to default content of the mobile terminal and can correspond to content displayed all the time. For example, the predetermined content 1 can include watch content, battery content, communication content and the like. The communication content can correspond to content indicating whether such wireless communication as Wi-Fi or the like is available. For example, the predetermined content 1 in FIG. 18 can correspond to the watch content. As shown in FIG. 18 (a), the predetermined content can be displayed at an upper part 22 of the first display area.

Subsequently, a first event may occur in the mobile terminal. In this instance, as shown in FIG. 18 (b), the mobile terminal can display a notification 2 for the first event on at least a part of an area of the first display area. In relation to this, when a new event occurs in the mobile terminal, assume that a notification for the new event is provided on the first display area 21/22 instead of a second display area 30. For example, the predetermined content 1 is continuously displayed on the upper part 22 of the first display area and the notification for the first event can be displayed on a bottom part 21 of the first display area.

Subsequently, a second event may occur in the mobile terminal. In this instance, as shown in FIG. 18 (c), the mobile terminal can display a notification 3 for the second event on at least a part of an area of the first display area. For example, the mobile terminal can display the notification 3 for the second event on the bottom part 21 of the first display area. In addition, the second event can correspond to an event occurred after the first event.

In this instance, the mobile terminal can display the notification 2 for the first event on the upper part 22 of the first display area by moving the notification 2 for the first event from the bottom part 21 of the first display area. In addition, if the second event occurs, the mobile terminal can display the predetermined content 1 on the second display area 30.

The aforementioned embodiment corresponds to a priority of a notification for an occurred event being higher than a priority of predetermined content among contents displayed on the mobile terminal. In particular, if a plurality of events occur, the predetermined content is displayed on the second display area, which is farther away from a gaze of a user.

Meanwhile, a third event may occur after the second event has occurred. In this instance, the mobile terminal can display a notification for the third event on the bottom part 21 of the first display area. In addition, the mobile terminal can display the notification 3 for the second event displayed on the bottom part 21 of the first display area on the upper part 22 of the first display area by moving the notification 3 for the second event to the upper part 22 of the first display area. In addition, the mobile terminal can display the notification for the first event displayed on the upper part 22 of the first display area on the second display area 30 by moving the notification for the first event to the second display area. In particular, if the third event occurs, the mobile terminal reduces a size of the predetermined content and displays the predetermined content on an uppermost part of the second display area 30 within a limit of not interrupting a display of the notification for the first event without displaying the predetermined content on the second display area 30.

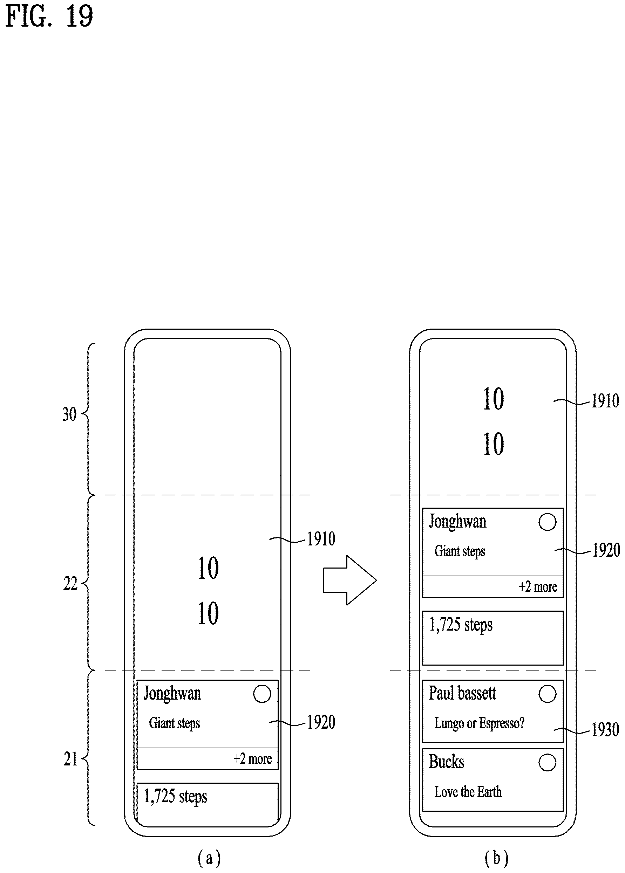

FIG. 19 is a diagram illustrating an example of displaying a notification on a display unit when a plurality of events occur in a mobile terminal related to an embodiment of the present invention. More specifically, FIG. 19 shows an example of applying the embodiment mentioned earlier in FIG. 18 to an application. In addition, in an embodiment of FIG. 19, assume that a notification 1920 for a first event is displayed on a bottom part 21 of a first display area.

The mobile terminal can display a notification 1920 for a first event on the bottom part 21 of the first display area when the first event occurs. In an embodiment of FIG. 19, the first event can correspond to an exercise notification. For example, the first event can correspond to a regular notification notified while a user performs a walking exercise. In addition, the mobile terminal can display predetermined content 1910 on an upper part 22 of the first display area. As shown in FIG. 19 (a), the first event corresponds to currently performed exercise and the notification 1920 for the first event corresponds to a current exercise situation. In addition, the predetermined content 1910 can correspond to watch content.

Subsequently, a second event may occur in the mobile terminal. In the embodiment of FIG. 19, the second event can correspond to message reception. In this instance, as shown in FIG. 19 (b), the mobile terminal can display a notification 1930 for the second event on the bottom part 21 of the first display area. In addition, the mobile terminal can display the notification 1920 for the first event on the upper part 22 of the first display area. In addition, the mobile terminal can display the predetermined content 1910 on the second display area 30.

In particular, the embodiment of FIG. 19 corresponds to a priority of content to be displayed on the mobile terminal is given to the occurred event rather than the watch content. A user can thus easily recognize an order of the occurred event based on a position on which a notification is displayed. Meanwhile, the embodiment of FIG. 19 is not limited by the exercise notification and the event of message reception. The embodiment of FIG. 19 can be applied to various events capable of being occurred in the mobile terminal.

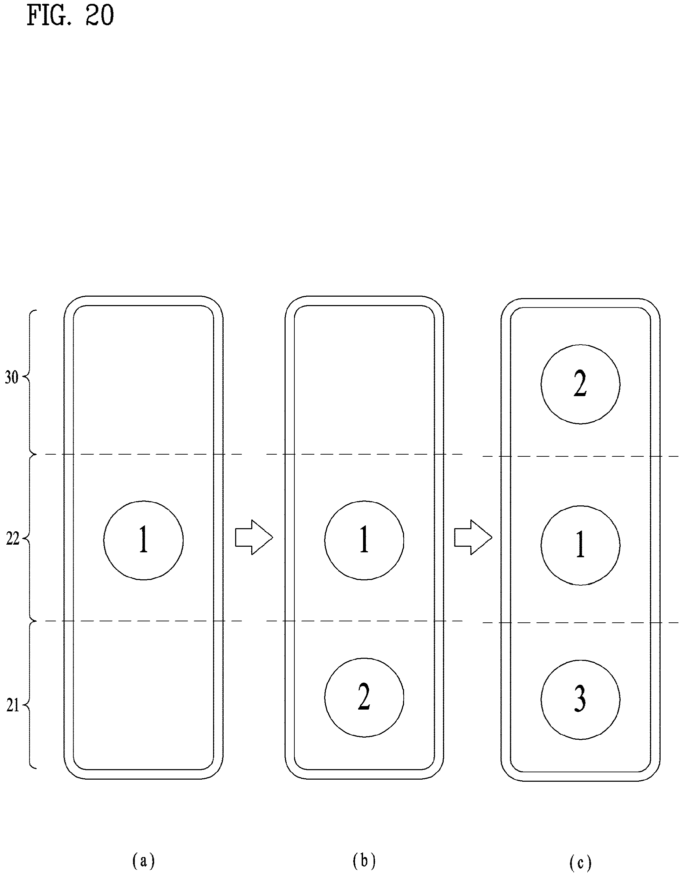

FIG. 20 is a diagram illustrating an example of displaying a notification on a display unit when a plurality of events occur in a mobile terminal related to an embodiment of the present invention. In an embodiment of FIG. 20, explanation on contents overlapped with the aforementioned embodiment of FIG. 18 is omitted.

As shown in FIG. 20 (a), the mobile terminal can display predetermined content 1 on the display unit irrespective of whether or not an event occurs. In this instance, the predetermined content 1 can correspond to content basically provided in the mobile terminal. In addition, the predetermined content 1 can be displayed on an upper part 22 of a first display area corresponding to a center of the display unit.

Subsequently, a first event may occur in the mobile terminal. In this instance, as shown in FIG. 20 (b), the mobile terminal can display a notification 2 for the first event on at least a part of an area of the first display area. In this instance, at least of a part of the area of the first display area can correspond to a bottom part 21 of the first display area. In addition, as shown in FIG. 20 (b), the predetermined content 1 can be continuously displayed on the upper part 22 of the first display area.

Subsequently, a second event may occur in the mobile terminal. In this instance, as shown in FIG. 20 (c), the mobile terminal can display a notification 3 for the second event on at least a part of an area of the first display area. For example, the mobile terminal can display the notification 3 for the second event on the bottom part 21 of the first display area.

In this instance, the mobile terminal can display the notification 2 for the first event on a second display area 30 by moving the notification 2 for the first event from the bottom part 21 of the first display area to the second display area 30. Although the second event occurs, the mobile terminal can continuously display the predetermined content 1 on the upper part 22 of the first display area.

According to the aforementioned embodiment, a priority of the predetermined content is recognized as higher than a priority of a notification for an occurred event among contents displayed in the mobile terminal and the predetermined content is displayed on the center of the display unit irrespective of whether or not an event occurs. Meanwhile, a third event may occur after the second event has occurred. In this instance, the mobile terminal can display a notification for the third event on the bottom part 21 of the first display area. This is because the bottom part 21 of the first display area corresponds to an area to which a notification for a most recently occurred event is provided.

In addition, the mobile terminal can display the notification for the second event displayed on the bottom part 21 of the first display area on the second display area 30 by moving the notification for the second event to the second display area 30. Although the third event occurs, the mobile terminal can continuously display the predetermined content on the upper part 22 of the first display area. In this instance, the notification for the first event displayed on the second display area 30 is reduced within a limit of not interrupting a display of the notification for the second event and can be simply displayed on an uppermost of the second display area.

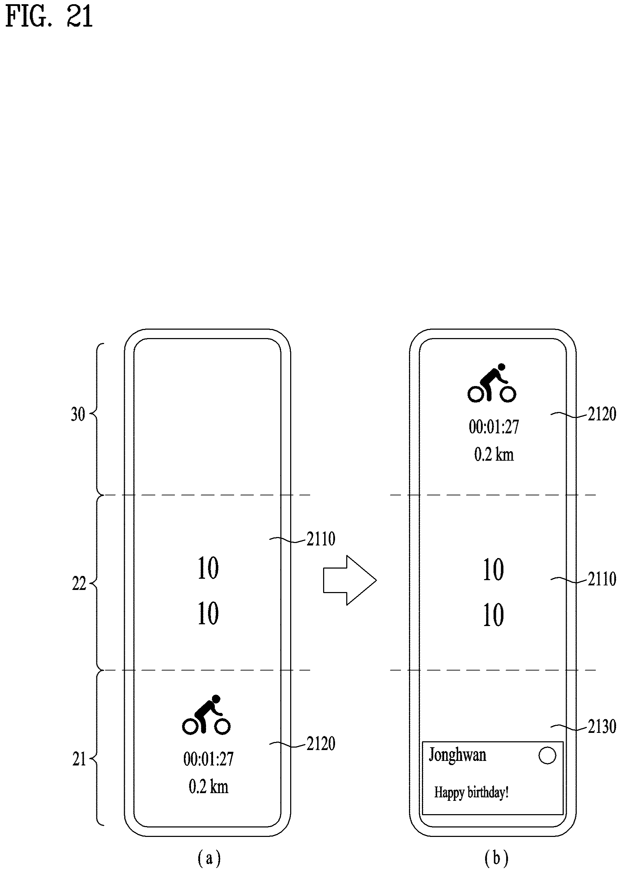

FIG. 21 is a diagram illustrating an example of displaying a notification on a display unit when a plurality of events occur in a mobile terminal related to another embodiment of the present invention. More specifically, FIG. 21 shows an example of applying the embodiment mentioned earlier in FIG. 20 to an application. In addition, in an embodiment of FIG. 21, assume that a first event occurs and a notification 2120 for the first event is displayed on a bottom part 21 of a first display area.

The mobile terminal can display the notification 2120 for the first event on the bottom part 21 of the first display area when the first event occurs. In the embodiment of FIG. 21, the first event can correspond to an exercise notification. For example, the first event can correspond to a regular notification notified while a user performs bicycle exercise. The regular notification can provide a type of exercise, exercise time, exercise distance and the like of the exercise in progress. In addition, the mobile terminal can display predetermined content 2110 on an upper part 22 of the first display area. For example, the predetermined content 2110 can correspond to watch content.

Subsequently, a second event may occur in the mobile terminal. In the embodiment of FIG. 21, the second event can correspond to message reception. In this instance, as shown in FIG. 21 (b), the mobile terminal can display a notification 2130 for the second event on the bottom part 21 of the first display area. In addition, the mobile terminal can display the notification 2120 for the first event on the second display area 30The mobile terminal can also continuously display the predetermined content 2110 on the upper part 22 of the first display area.

In particular, the embodiment of FIG. 21 corresponds to a priority of content to be displayed on the mobile terminal being given to the watch content rather than the occurred event. A user can easily recognize an order of the occurred event based on a position on which a notification is displayed. Meanwhile, the embodiment of FIG. 19 is not limited by the exercise notification and the event of message reception. The embodiment of FIG. 19 can be applied to various events capable of being occurred in the mobile terminal.

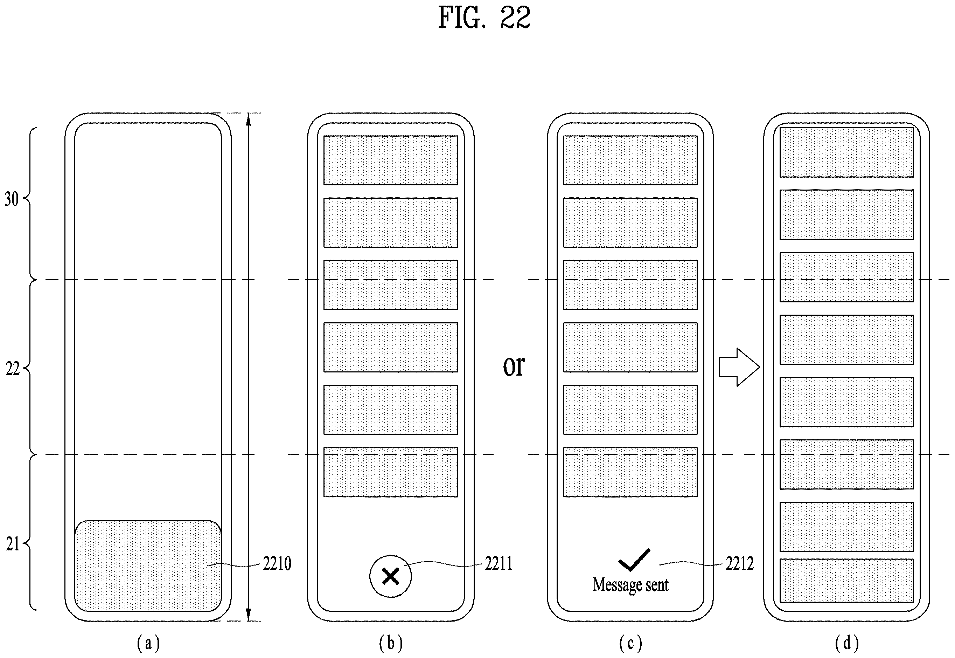

FIG. 22 is a diagram illustrating an embodiment of displaying a pop-up icon associated with displayed contents when the contents are displayed on a display unit of a mobile terminal related to an embodiment of the present invention. The mobile terminal can display first content on a first display area 21/22 and a second display area 30. In addition, as shown in FIG. 22 (a), the mobile terminal can display a pop-up icon 2210 on a bottom part 21 of the first display area to control the first content. In this instance, the pop-up icon 2210 can correspond to an icon for indicating a state of the first content, an icon for indicating feedback in response to a sensed input signal or the like. In addition, the mobile terminal displays the pop-up icon 2210 on the bottom part 22 of the first display area nearest to a user to enable the user to easily recognize the pop-up icon.

Meanwhile, if control for the first content is terminated, the mobile terminal can eliminate or delete the pop-up icon from the display unit. For example, FIG. 22 (b) and FIG. 22 (c) shows a state that the pop-up icon 2211/2212 is displayed on the display unit. In this instance, the pop-up icon 2211 shown in FIG. 22 (b) can correspond to an icon configured to indicate that a procedure is in progress. In addition, the pop-up icon 2212 shown in FIG. 22 (c) can correspond to an icon configured to indicate that a procedure is over. In addition, if an operation corresponding to the pop-up icon 2211/2212 shown in FIG. 22 (c) is completed, as shown in FIG.22 (d), the mobile terminal eliminate the pop-up icon from the display unit and can display the first content on the whole of the display unit.

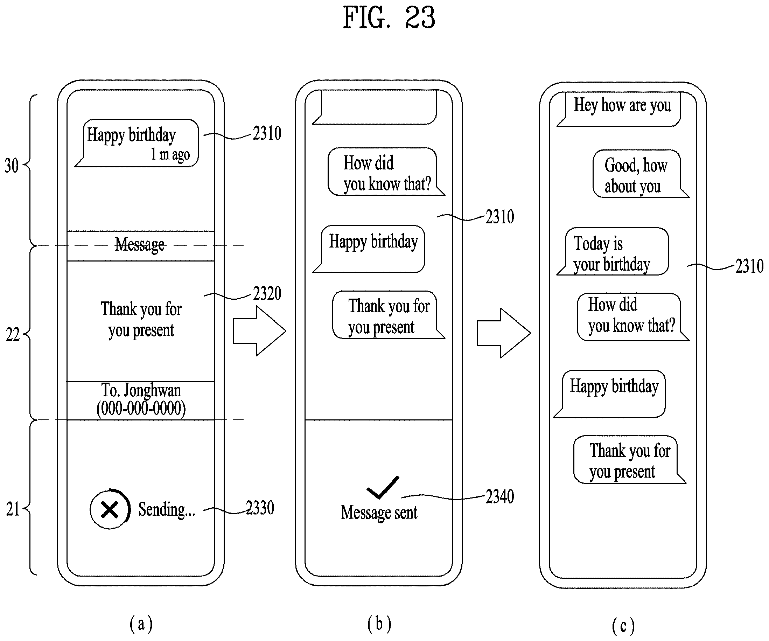

FIG. 23 is a diagram illustrating an embodiment of displaying a pop-up icon associated with displayed contents when the contents are displayed on a display unit of a mobile terminal related to an embodiment of the present invention. More specifically, FIG. 23 corresponds to an example of applying the embodiment mentioned earlier in FIG. 22 to an application. In addition, when a message is received from a counterpart in a message application, an embodiment of FIG. 23 corresponds to a case of responding in response to the message.

As shown in FIG. 23 (a), the mobile terminal can write a response message while a message application is executed. In relation to this, when the message application is executed, the mobile terminal displays a message 2310 transceived with a user on a second display area 30, displays a response message 2320 on an upper part 22 of a first display area and can display a pop-up icon 2330 on a bottom part 21 of the first display area. In this instance, the response message 2320 displayed on the upper part 22 of the first display area can correspond to a message written by recognizing voice of a user, a message written via a keyboard, a message selected from predetermined response message list, a message written using an emoticon, or the like. Referring to FIG. 23 (a), the mobile terminal is transmitting such a message as 'Thank you for your present' to a mobile terminal of a counterpart. In addition, for example, a first pop-up icon 2330 can correspond to an icon indicating that message transmission is in progress.

Subsequently, having transmitted a message to the mobile terminal of the counterpart, the mobile terminal can display a message list on the first display area 21/22 and a second display area 30. In this instance, as shown in FIG.23 (b), the mobile terminal eliminates the first pop-up icon 2040 displayed on the bottom part 21 of the first display area from the display unit and can display a second pop-up icon 2340. For example, the second pop-up icon 2340 can correspond to an icon indicating that message transmission is completed.

Subsequently, as shown in FIG. 23 (c), the mobile terminal can display a plurality of messages transceived with a counterpart on the first display area 21/22 and the second display area 30. In addition, the mobile terminal can eliminate the second pop-up icon 2340 from the bottom part 21 of the first display area. Meanwhile, the embodiment of FIG. 23 is not limited by the message application and can be applied to various applications executed by the mobile terminal. A user can easily recognize a progress of a currently executed application via the bottom part of the first display area capable of being easily recognized by the user in a watch-type mobile terminal.

When contents including a list are displayed on the display unit, FIGS. 24 to 29 show an embodiment of displaying a pop-up icon for controlling the displayed contents. In addition, FIGS. 24 to 29 show an embodiment of terminating the displayed contents including the list. In particular, FIG. 24 is a diagram illustrating an embodiment of displaying a pop-up icon for controlling displayed contents when the contents including a list are displayed on a display unit of a mobile terminal related to an embodiment of the present invention.

The mobile terminal can display first content on a first display area 21/22 and a second display area 30. In this instance, the first content can correspond to a list including at least one or more options. In addition, the first content can correspond to an execution screen of an application. In addition, as shown in FIG. 24 (a), the mobile terminal can display a pop-up icon 2410 for controlling the first content on a bottom part 21 of the first display area. In this instance, the pop-up icon 2410 can correspond to an icon for controlling the first content. In particular, if an input signal is sensed, the pop-up icon 2410 shown in FIG. 24 can control the first content. Hence, the pop-up icon 2410 is different from the pop-up icon for indicating a progress of the first content mentioned earlier in FIG. 22. In addition, the mobile terminal displays the pop-up icon 2410 on the bottom part 21 of the first display area, which is nearest to the user, to enable the user to easily recognize and use the pop-up icon 2410.

Meanwhile, as shown in FIG. 24 (b), the mobile terminal can sense a first input signal 2420 while the pop-up icon 2410 is displayed on the display unit. In this instance, the first input signal can correspond to a drag touch input or a flicking touch input in down direction. In addition, a position of an area at which the first input signal 2420 starts can correspond to the first display area 21/22 or the second display area 30.

Subsequently, as shown in FIG. 24 (c), the mobile terminal can display second content 2430 on the second display area 30 according to the first input signal 2420. In this instance, the mobile terminal can eliminate the pop-up icon 2410 displayed on the bottom part 21 of the first display area from the display unit. In addition, in this instance, the first content displayed on the first display area 21/22 and the second display area 30 can move to the down direction as much as a length of the second display area 30. In this instance, the second content 2430 corresponds to predetermined content. The predetermined content can correspond to watch content, an unidentified notification for an occurred event or the like. In addition, the second content 2430 can correspond to previously executed content prior to currently displayed content.

Subsequently, as shown in FIG. 24 (c), the mobile terminal can sense a second input signal 2440 while the first and the second content 2430 are displayed. In this instance, the second input signal 2440 can correspond to a drag touch input or a flicking touch input in down direction. In addition, a position of an area at which the second input signal 2440 starts can correspond to the second display area 30. Meanwhile, if the position of the area at which the second input signal starts corresponds to the first display area 21/22, the mobile terminal can scroll the first content according to the second input signal 2440.

And, as shown in FIG. 24 (d), the mobile terminal can display the second content 2430 on the first display area 21/22 by moving the second content to the first display area according to the second input signal 2440. More specifically, the mobile terminal can display the second content 2430 on an upper part 22 of the first display area. In this instance, the mobile terminal can eliminate the first content displayed on the first display area 21/22 from the display unit.

Meanwhile, the mobile terminal can display the second content 2430 on the entire display unit according to the second input signal 2440. In particular, the mobile terminal terminates an application corresponding to the first content and can switch to a home screen or a previously executed application. According to the present embodiment, when the first content is displayed on the first display area and the second display area, if the first input signal and the second input signal are sensed, the mobile terminal terminates the first content and can switch to a home screen or a previous screen.

Meanwhile, the mobile terminal can sense a third input signal while the second content is displayed on the second display area 30. In this instance, the third input signal can correspond to a drag touch input or a flicking touch input in up direction. In this instance, the mobile terminal eliminates the second content 2430 displayed on the second display area 30 from the display unit and can display the first content on the first display area 21/22 and the second display area 30 again. By doing so, a user can temporarily check current time or previously executed content by putting an input of dragging an upper part of the display unit in down direction and up direction and can concentrate on the currently executed first content.

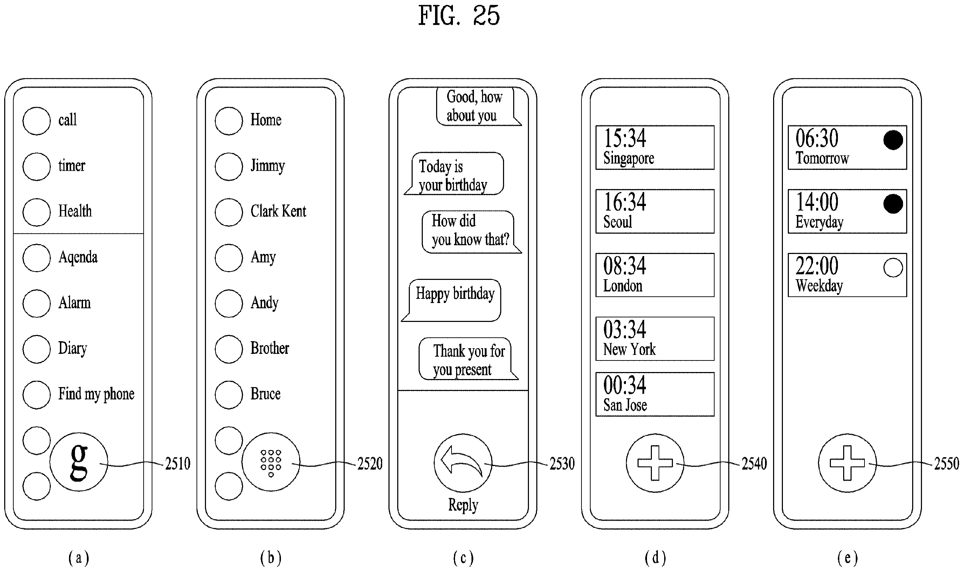

FIG. 25 is a diagram illustrating an example of the pop-up icon mentioned earlier in FIG. 24. As mentioned earlier in FIG. 24, a pop-up icon can correspond to an icon for controlling content displayed on the display unit. In particular, if an input signal for the pop-up icon is sensed, the mobile terminal performs a function corresponding to the pop-up icon and can control the content displayed on the display unit. In addition, if a list is displayed on at least a part of the display unit, the mobile terminal can display the pop-up icon. In particular, although the list is not displayed on a whole page, the mobile terminal can display the pop-up icon.

In one embodiment, as shown in FIG. 25 (a), the mobile terminal can display a pop-up icon 2510 on a list of applications. In this instance, the pop-up icon 2510 can correspond to an icon for inputting audio to select one from the list of a plurality of the displayed applications. In another embodiment, as shown in FIG. 25 (b), the mobile terminal can display a pop-up icon 2520 on a list of contacts. In this instance, the pop-up icon 2520 can correspond to an icon for displaying a dial pad as well as the list of a plurality of the displayed contacts.

In another embodiment, as shown in FIG. 25 (c), the mobile terminal can display a pop-up icon 2530 on a list of messages. In this instance, the pop-up icon 2530 can correspond to an icon for responding to a message. In addition, in another embodiment, as shown in FIG. 25 (d), the mobile terminal can display a pop-up icon 2540 on a list of world times. In this instance, the pop-up icon 2540 can correspond to an icon for adding not only a list of times of a plurality of cities displayed on the display unit but also times of other cities.

And, in another embodiment, as shown in FIG. 25 (e), the mobile terminal can display a pop-up window 2550 on a list of alarms. In this instance, the pop-up icon 2550 can correspond to an icon for adding not only alarms included in the list but also other alarms. Meanwhile, besides the embodiments shown in FIG. 25, if a list is displayed and an additional control related to the displayed list is required, the mobile terminal can display a pop-up icon on a bottom part of the first display area.

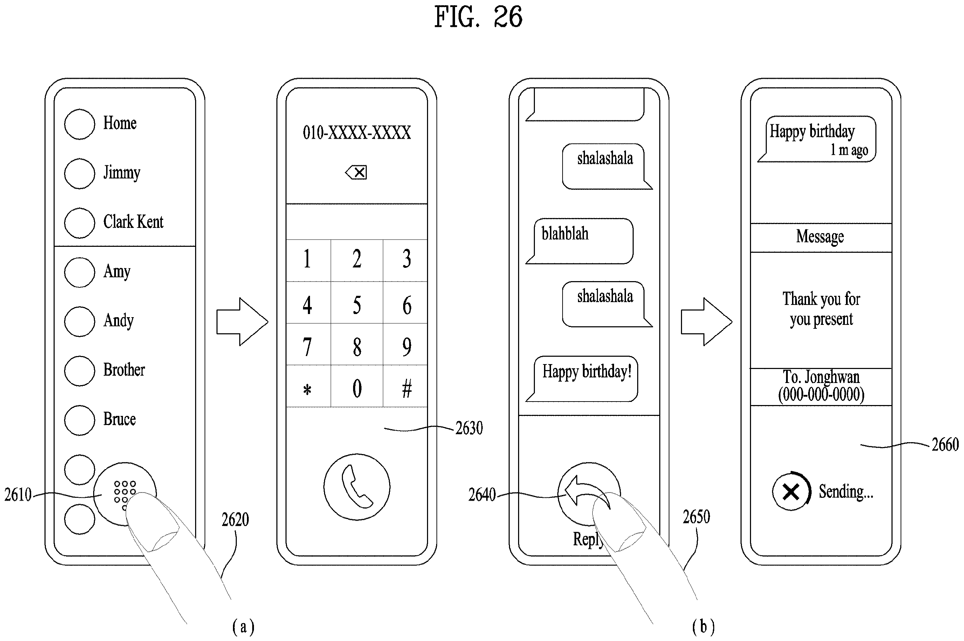

FIG. 26 is a diagram illustrating an embodiment of contents displayed on a display unit when an input signal is sensed on the pop-up icon mentioned earlier in FIG. 24. In one embodiment, as shown in FIG. 26 (a), the mobile terminal can display a pop-up icon 2610 on a list of contacts. In this instance, the mobile terminal can sense a first input signal 2620 for the pop-up icon 2610. In this instance, the first input signal 2620 can correspond to a short touch input. In addition, as mentioned earlier in FIG. 25 (b), the pop-up icon 2610 can correspond to an icon for displaying a dial pad instead of the list of a plurality of the displayed contacts. Hence, the mobile terminal can display a dial pad 2630 on the display unit. In particular, a user can directly use the dial pad using the pop-up icon 2610 on the list of contacts.

In another embodiment, as shown in FIG. 26 (b), the mobile terminal can display a pop-up icon 2640 on a list of messages. In this instance, the mobile terminal can sense a second input signal 2650 for the pop-up icon 2640. In this instance, the second input signal 2650 can correspond to a short touch input. In addition, as mentioned earlier in FIG. 25 (c), the pop-up icon 2640 can correspond to an icon for responding to a message. Hence, the mobile terminal can provide an option for responding to a message to a user. For example, the mobile terminal can send a response message 2660 based on voice received from the user. In particular, the user can immediately send a response using the pop-up icon 2640 on the list of messages.

Meanwhile, the present invention is not limited by the embodiments shown in FIG. 26. Besides the embodiments, if an input signal for a pop-up icon displayed on a list is sensed, the mobile terminal can immediately execute a function corresponding to the pop-up icon.

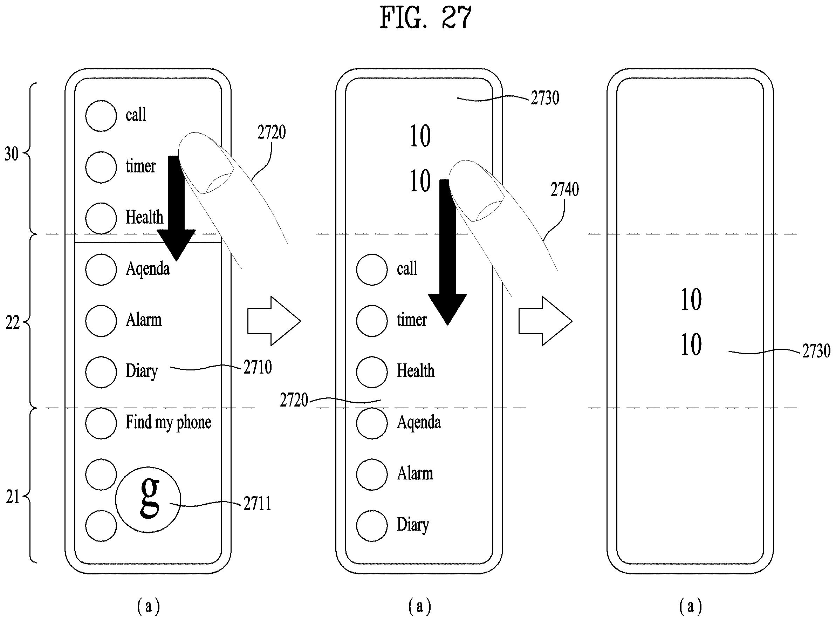

FIG. 27 is a diagram illustrating an embodiment of controlling contents according to an input signal when a pop-up icon is displayed on a display unit of a mobile terminal related to an embodiment of the present invention. As shown in FIG. 27 (a), the mobile terminal can display a list of applications on the display unit. In this instance, the mobile terminal can display a pop-up icon 2711 on a bottom part of a first display area. As mentioned earlier in FIG. 15, the mobile terminal can display a list of recently used applications or a list of frequently used applications on a second display area 30. In addition, the mobile terminal can sense a first input signal 2720. In this instance, the first input signal 2720 can correspond to a drag touch input or a flicking touch input in down direction.

Subsequently, as shown in FIG. 27 (b), the mobile terminal can display watch content 2730 on the second display area 30 according to the first input signal 2720. In this instance, the mobile terminal can eliminate the pop-up icon displayed on the bottom part of the first display area from the display unit. In addition, the mobile terminal can display the list of applications displayed on the display unit by moving the list in down direction as much as a length of the second display area 30.

Subsequently, as shown in FIG. 27 (b), the mobile terminal can sense a second input signal 2740 while the watch content and the list of applications are displayed on the display unit. In this instance, the second input signal 2740 can correspond to a drag touch input or a flicking touch input in down direction. In addition, the second input signal 2740 can correspond to a drag touch input or a flicking touch input starting at the second display area 30.

In this instance, as shown in FIG. 27 (c), the mobile terminal can display watch content 2730 on an upper part 22 of the first display area according to the second input signal 2740. In this instance, the mobile terminal can eliminate the list of applications displayed on the first display area 21/22 from the display unit. In particular, in the aforementioned embodiment, if the mobile terminal senses the first input signal and the second input signal while the list of applications is displayed, the mobile terminal terminates the display of the list of applications and can switch to a home screen.

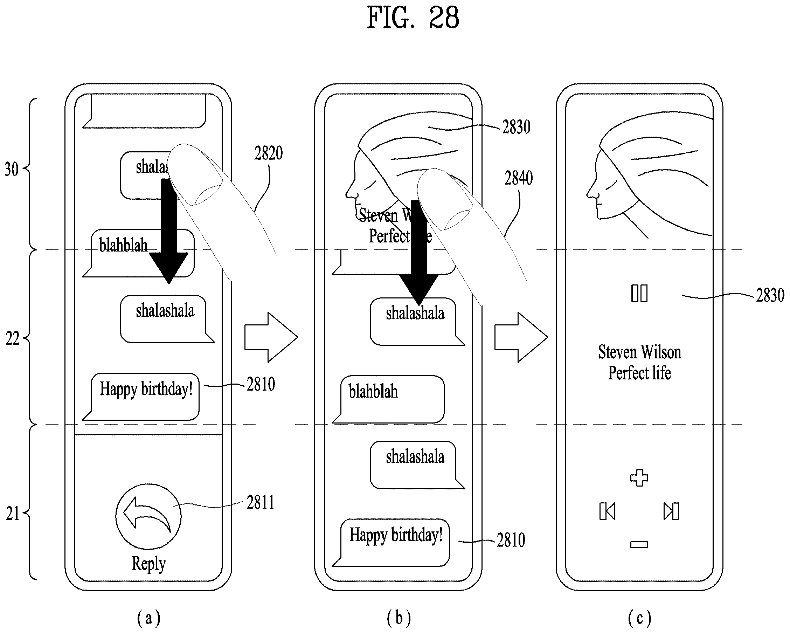

FIG. 28 is a diagram illustrating an example of controlling contents according to an input signal when a pop-up icon is displayed on a display unit of a mobile terminal related to an embodiment of the present invention. In FIG. 28, contents overlapped with embodiments of FIG. 27 are omitted.

As shown in FIG. 28 (a), the mobile terminal can display a list 2810 of messages on the display unit. In this instance, the mobile terminal can display a pop-up icon 2811 on a bottom part 21 of a first display area. Subsequently, as shown in FIG. 28 (b), the mobile terminal can display music content 2830 on a second display area 30 according to a first input signal 2820. In relation to this, the music content 2830 can correspond to previously used content before a message application is executed or content in use by multitasking while the message application is currently executed.

Subsequently, as shown in FIG. 28 (b), the mobile terminal can sense a second input signal 2840 while the list 2840 of messages and the music content are displayed on the display unit. In this instance, the second input signal 2840 can correspond to a flicking touch input or a drag touch input starting at the second display area 30. If a starting point of the second input signal 2840 corresponds to the first display area 21/22, the mobile terminal can scroll the list of message 2810 according to the second input signal 2840.

Subsequently, as shown in FIG. 28 (c), the mobile terminal can display the music content 2830 on the first display area 21/22 and the second display area 30. In particular, when the list of messages is displayed, previously executed content or multitasking content is checked by the first input signal and the previously executed content or the multitasking content is displayed on the display unit as a whole screen by the second input signal.

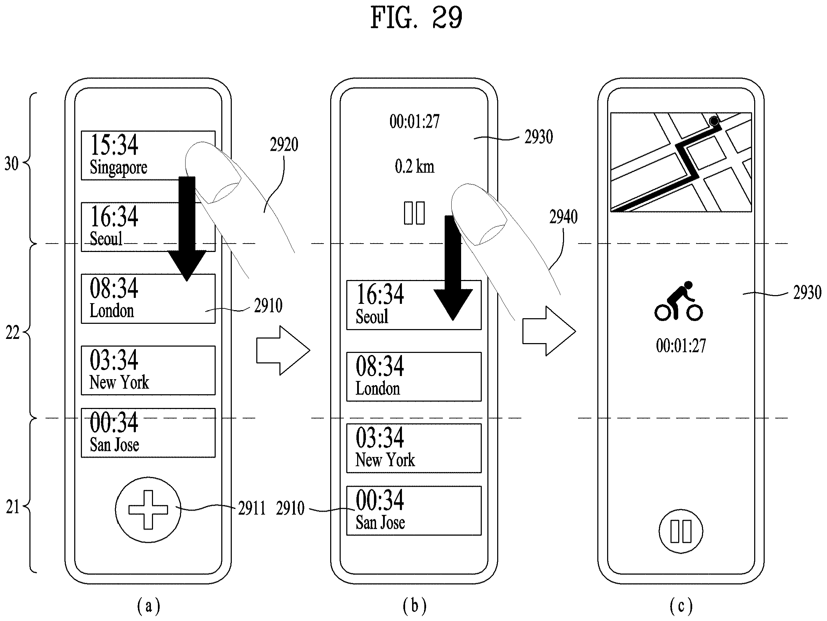

FIG. 29 is a diagram illustrating an example of controlling contents according to an input signal when a pop-up icon is displayed on a display unit of a mobile terminal related to an embodiment of the present invention. In FIG. 29, contents overlapped with embodiments of FIG. 27 are omitted. As shown in FIG. 29 (a), the mobile terminal can display a list 2910 of world times on the display unit. In this instance, the mobile terminal can display a pop-up icon 2911 on a bottom part 21 of a first display area.

Subsequently, as shown in FIG. 29 (a), the mobile terminal can sense a first input signal 2920. In this instance, as shown in FIG. 29 (b), the mobile terminal can display exercise content 2930 on a second display area 30 according to the first input signal 2920. For example, the exercise content 2930 can be displayed on the second display area 30 in a manner that exercise time, exercise distance, an exercise stop button and the like are displayed in a reduced size.

Subsequently, as shown in FIG. 29 (b), the mobile terminal can sense a second input signal 2940 while the list 2910 of world times and the exercise content 2930 are displayed on the display unit. In addition, as shown in FIG. 29 (c), the mobile terminal can display watch content 2930 on an upper part 21 of the first display area. According to the aforementioned embodiment, if the first input signal and the second input signal are sensed while the list of world times is displayed, the mobile terminal terminates an application corresponding to the list of world times and can switch to a home screen.

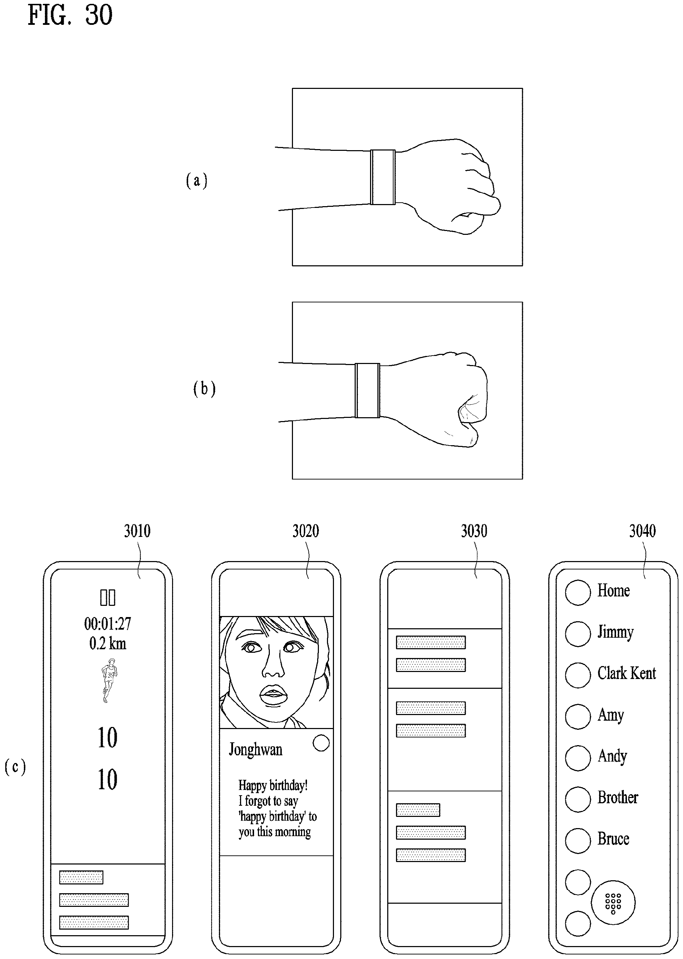

In the following, FIGS. 30 to 34 correspond to embodiments of controlling contents displayed on the display unit based on an angle sensed by the mobile terminal. In this instance, the angle sensed by the mobile terminal can correspond to a wrist angle of a user wearing the mobile terminal. In addition, in the embodiments of FIGS. 30 to 34, assume that the mobile terminal is worn on a user.

First of all, FIG. 30 is a diagram illustrating an example of controlling contents displayed on a display unit based on an angle sensed by a mobile terminal related to an embodiment of the present invention. The mobile terminal may be positioned within a predetermined angle range. In this instance, the predetermined angle range can correspond to an angle of the display unit of the mobile terminal capable of being easily recognized by a user in general. For example, the predetermined angle range can correspond to angles ranging from 0 to about 30 degrees. In addition, as mentioned earlier in FIG. 6, when a wrist is naturally laid on a table, an angle formed by the wrist and the table can correspond to about 30 degrees.

FIG. 30 (a) shows a state that the inside of a wrist of a user wearing the mobile terminal is contacted with the table and an angle sensed by the mobile terminal can correspond to 0 degree. In addition, FIG. 30 (b) shows a state that the outside of the wrist of the user wearing the mobile terminal is contacted with the table and the inside of the wrist is not contacted with the table. In this instance, an angle sensed by the mobile terminal can correspond to 30 degrees. In addition, although it is not depicted in FIG. 30, when the user wearing the mobile terminal lifts up the wrist and sees the mobile terminal, if the wrist and a floor form a horizontal plane, an angle sensed by the mobile terminal can correspond to 0 degree.

In this instance, the mobile terminal can activate a first display area and a second display area. This is because, if the mobile terminal is positioned within a predetermined angle range, a user can recognize all of a long display unit of the present invention stretched in horizontal direction or vertical direction. In addition, the mobile terminal can display first content on the first display area and the second display area.

In particular, the mobile terminal can display the first content on the whole of the display unit including the first display area and the second display area. For example, as shown in a second drawing of FIG. 30 (c), if a sensed angle is within a predetermined angle range, the mobile terminal can display a message application on the first display area and the second display area. In addition, for example, as shown in a third drawing of FIG. 30 (c), if a sensed angle is within a predetermined angle range, the mobile terminal can display a plurality of document contents on the first display area and the second display area. In addition, for example, as shown in a fourth drawing of FIG. 30 (c), if a sensed angle is within a predetermined angle range, the mobile terminal can display a list of a plurality of contacts on the first display area and the second display area.

Meanwhile, the mobile terminal can display a plurality of contents on the first display area and the second display area at the same time. For example, as shown in a first drawing of FIG. 30 (c), if a sensed angle is within a predetermined angle range, the mobile terminal can display exercise content, watch content and document content on the first display area and the second display area at the same time.

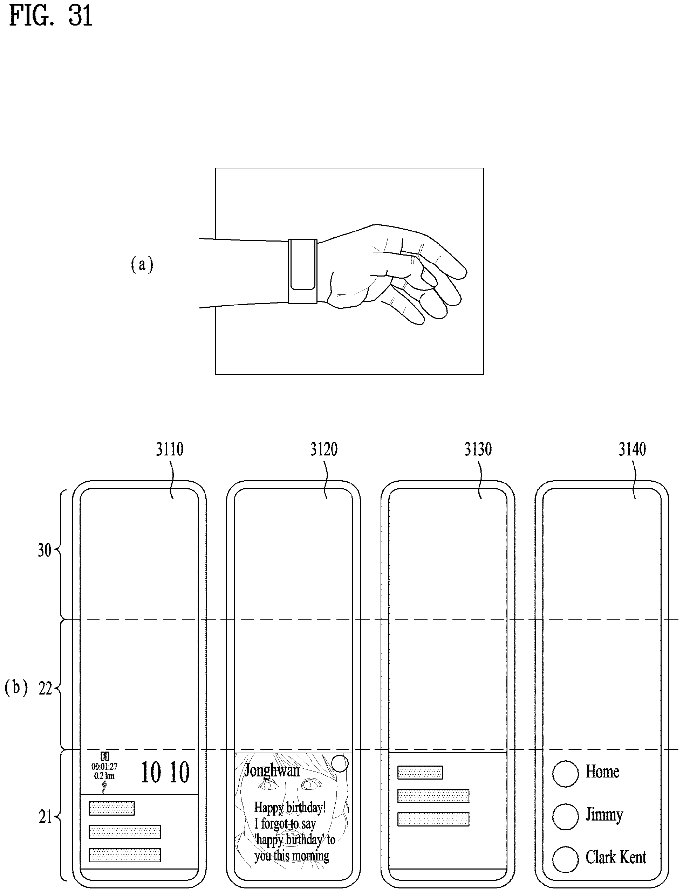

FIG. 31 is a diagram illustrating an example of controlling contents displayed on a display unit based on an angle sensed by a mobile terminal related to an embodiment of the present invention. Unlike the embodiment of FIG. 30, the mobile terminal may be positioned at the outside of a predetermined angle range. As mentioned earlier in FIG. 30, the predetermined angle range can correspond to angles ranging from 0 degree to about 30 degrees. For example, in FIG. 31 (a), an angle formed by a wrist of a user wearing the mobile terminal and a table corresponds to 90 degrees and the angle can correspond to an angle not belonging to the predetermined angle range.

In this instance, it may be difficult for a user to recognize a second display area 30 and an upper part 22 of a first display area of a display unit of the mobile terminal. In one embodiment, the mobile terminal activates a bottom part 21 of the first display area and can deactivate the second display area 30 and the upper part 22 of the first display area. In this instance, assume that the upper part of the first display area and the bottom part of the first display area are deactivated and activated, respectively. In another embodiment, the mobile terminal activates both the first display area 21/22 and the second display area 30 and can display content on the bottom part 21 of the first display area only. In this instance, the mobile terminal can display a predetermined image on both the upper part 22 of the first display area and the second display area 30 on which the content is not displayed.

In this instance, the mobile terminal can display first content on the bottom part of the first display area. For example, as shown in a second drawing of FIG. 31 (b), if a sensed angle does not belong to a predetermined angle range, the mobile terminal can display a message 3120 on the bottom part 21 of the first display area. In this instance, if an image is included in the message 3120, as shown in a second drawing of FIG. 31 (b), a text and the image can be displayed by being overlapped with each other. In addition, for example, as shown in a third drawing of FIG. 31 (b), if a sensed angle does not belong to a predetermined angle range, the mobile terminal can display document content 3130 on the bottom part 21 of the first display area. In this instance, if a drag touch input for the bottom part 21 of the first display area is sensed, the mobile terminal can scroll the document content 3130 in the bottom part 21 of the first display area.

And, for example, as shown in a fourth drawing of FIG. 31 (b), if a sensed angle does not belong to a predetermined angle range, the mobile terminal can display a list 3140 of contacts on the bottom part 21 of the first display area. In this instance, if a drag touch input for the bottom part 21 of the first display area is sensed, the mobile terminal scrolls the list 3140 of contacts in the bottom part 21 of the first display area and can additionally display a different contact on the bottom part 21 of the first display area.

Meanwhile, the mobile terminal can display a plurality of contents on the bottom part 21 of the first display area at the same time. In this instance, since a screen capable of displaying a plurality of the contents is small, a plurality of the contents can be displayed on the screen by being reduced. For example, as shown in a first drawing of FIG. 31 (b), if a sensed angle does not belong to a predetermined angle range, the mobile terminal can display exercise content, watch content and document content on the bottom part 21 of the first display area at the same time by reducing the exercise content, the watch content and the document content.

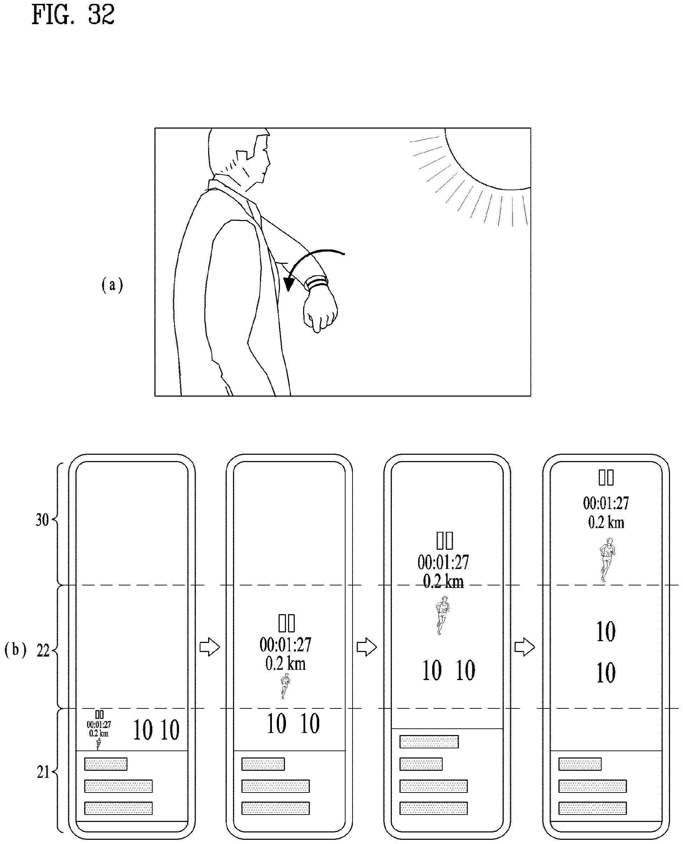

FIG. 32 is a diagram illustrating an example of controlling contents displayed on a display unit based on an angle sensed by a mobile terminal related to an embodiment of the present invention. More specifically, unlike the aforementioned embodiment of FIG. 30 and the embodiment of FIG. 31, FIG. 32 shows an embodiment of displaying contents when a wrist of a user wearing the mobile terminal changes. In addition, in the embodiment of FIG. 32, assume that a first display area and a second display area are activated.

The mobile terminal can sense an angle change of the mobile terminal. In this instance, as shown in FIG. 32 (a), the mobile terminal can sense that an angle of the mobile terminal is changing from an angle not belonging to a predetermined angle range to an angle belonging to the predetermined angle range. For example, as shown in FIG. 32 (a), an angle change can correspond to a case that an angle of a wrist of a user wearing the mobile terminal changes from 120 degrees to 20 degrees.

In this instance, the mobile terminal can change an area on which content is displayed among the first display area 21/22 and the second display area 30 based on a change of a sensed angle. In particular, as shown in FIG. 32 (b), the mobile terminal can change the area on which the identical content is displayed based on the change of the sensed angle.

For example, if an angle sensed by the mobile terminal corresponds to 120 degrees, as shown in a first drawing of FIG. 32 (b), the mobile terminal can display exercise content, watch content and document content at the same time on the bottom part 21 of the first display area by reducing the exercise content, the watch content and the document content. Subsequently, if the angle sensed by the mobile terminal becomes smaller than 120 degrees, as shown in a second drawing of FIG. 32 (b), the mobile terminal can display the exercise content, the watch content and the document content on the upper part 22 of the first display area and the bottom part 21 of the first display area. In this instance, the mobile terminal can display the exercise content, the watch content and the document content with a size greater than a size of the contents shown in FIG. 32 (a).

Subsequently, if the angle sensed by the mobile terminal becomes further smaller than 120 degrees, as shown in a third drawing of FIG. 32 (b), the mobile terminal can display the exercise content, the watch content and the document content on the second display area 30 and the first display area 21/22. In this instance, since the angle sensed by the mobile terminal does not belong to the predetermined angle range, contents may not be displayed on a part of the second display area 30. Subsequently, if the angle sensed by the mobile terminal corresponds to 20 degrees, as shown in a fourth drawing of FIG. 32 (b), the mobile terminal can display the exercise content, the watch content and the document content on the whole of the display unit. In this instance, since the angle sensed by the mobile terminal belongs to the predetermined angle range, the mobile terminal can display the exercise content on the second display area 30, display the watch content on the upper part 22 of the first display area and display the document content on the bottom part 21 of the first display area.

Meanwhile, unlike the embodiment of FIG. 32, the mobile terminal can sense that an angle sensed by the mobile terminal is increasing. In this instance, in opposite to the embodiment of FIG. 32, the mobile terminal displays contents on the whole of the display unit and can gradually change to display the contents on the bottom part of the first display area.

In particular, according to the aforementioned embodiment, if an area on which content is displayed is changing according to an angle change of a wrist of a user, the user can use the content at a position capable of easily recognizing the content. Meanwhile, although it is not depicted in FIG. 32, if a position on which content is displayed is immediately changed according to a change of an angle sensed by the mobile terminal, a user may feel inconvenience. Hence, in one embodiment, if the sensed angle changes, the mobile terminal can change the positon on which the content is displayed to at least one among the first display area and the second display area based on an angle sensed after prescribed time elapses. In another embodiment, when the sensed angle changes, if the angle changes more than a predetermined angle, the mobile terminal can change the positon on which the content is displayed to at least one among the first display area and the second display area.

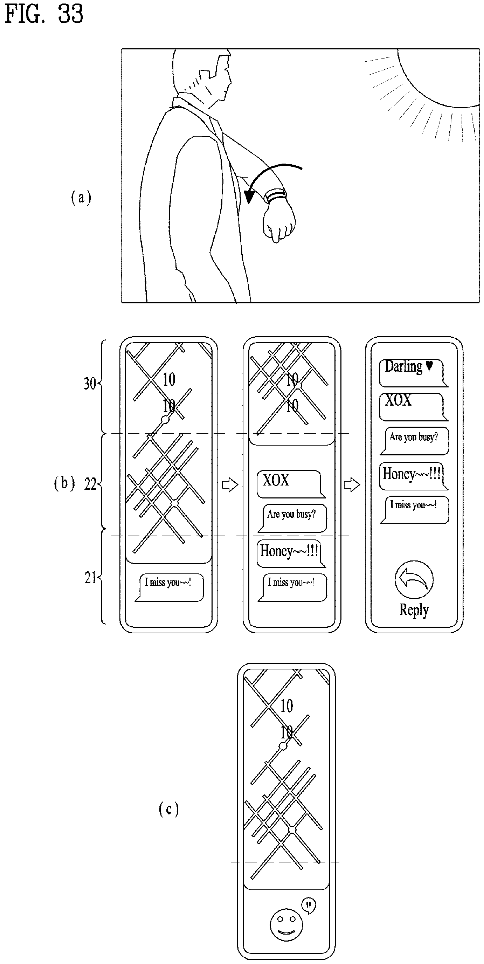

FIG. 33 is a diagram illustrating an example of controlling contents displayed on a display unit based on an angle sensed by a mobile terminal related to an embodiment of the present invention. More specifically, unlike the embodiment of FIG. 32, FIG. 33 shows an embodiment of controlling content displayed on the display unit according to a change of a sensed angle when a different person is positioned at an opposite side of a user wearing the mobile terminal. In FIG. 33, explanation on contents overlapped with the embodiment of FIG. 32 is omitted. In addition, in the embodiment of FIG. 33, assume that the first display area and the second display area are activated.

The user wearing the mobile terminal can use the mobile terminal not only when user is alone but also when a different person is positioned at an opposite side of the user or near the user. In this instance, the mobile terminal can display content on the display unit by considering not only the angle sensed by the mobile terminal mentioned earlier in FIG. 32 but also whether the content is secured. In this instance, whether the content is secured can correspond to whether the content displayed on the mobile terminal violates privacy of a user. For example, content requiring security can correspond to a message, schedule, diary and the like. In addition, for example, if content capable of being shared with a counterpart is included in the content requiring security, security may not be required.

The mobile terminal can sense an angle change of the mobile terminal. For example, as shown in FIG. 33 (a), the mobile terminal can sense that an angle of the mobile terminal is changing from an angle not belonging to a predetermined angle range to an angle belonging to the predetermined angle range. For example, as shown in FIG. 33 (a), an angle change can correspond to a case that an angle of a wrist of a user wearing the mobile terminal changes from 120 degrees to 20 degrees. In addition, in FIG. 33 (a), the user wearing the mobile terminal may be in a state of talking with a different person positioned at an opposite side of the user.

In this instance, the mobile terminal can change an area on which first content is displayed among a first display area and a second display area based on an angle of the mobile terminal and whether content is secured. For example, the first content can correspond to content provided to the user wearing the mobile terminal. Contents shown in FIG. 33 (b) correspond to message contents. In an embodiment of FIG. 33, assume that the message contents correspond to contents not requiring security.

And, the mobile terminal can display second content on an area on which the first content is not displayed among the first display area and the second display area. For example, the second content corresponds to content provided to a different person instead of the user and can correspond to watch content, image content and the like. Further, the mobile terminal can provide such default content as watch content to a different person positioned near the user by the mobile terminal.

For example, if an angle sensed by the mobile terminal corresponds to 120 degrees, as shown in a first drawing of FIG. 33 (b), the mobile terminal can display message content on the bottom part 21 of the first display area. In this instance, since an area capable of displaying content is small, the mobile terminal can display a recently received message or a recently sent message on the bottom part 21 of the first display area only. Meanwhile, in the first drawing of FIG. 33 (b), the mobile terminal can display an image and watch content on a remaining area except the area on which the message content is displayed. In this instance, a different person positioned near the user can see the second display area 30 and the upper part 22 of the first display area. For example, the watch content can be displayed on the second display area 30 capable of being easily seen to a counterpart person.

Meanwhile, if an angle sensed by the mobile terminal corresponds to 120 degrees, as shown in FIG. 33 (c), the mobile terminal can display an icon corresponding to the message content on the bottom part 21 of the first display area instead of the message content. This can correspond to a case that the message content requires security. In addition, this can correspond to a message received from a counterpart preferred by the user and the mobile terminal may display an icon including no special content.

Subsequently, if the angle sensed by the mobile terminal becomes smaller than 120 degrees, as shown in a second drawing of FIG. 33 (b), the mobile terminal can display the message content on the first display area 21/22. For example, in the second drawing of FIG. 33 (b), the angle sensed by the mobile terminal can correspond to an angle not belonging to the predetermined angle range mentioned earlier in FIG. 20. In this instance, as shown in the second drawing of FIG. 33 (b), the mobile terminal can display a plurality of messages included in the message content on the upper part 22 of the first display area and the bottom part 21 of the first display area. Meanwhile, in the second drawing of FIG. 33 (b), the mobile terminal can provide current time to a counterpart person by displaying an image and watch content on a remaining area except the area on which the message content is displayed. For the beauty of the mobile terminal, the mobile terminal can also display image content on the remaining area.

Subsequently, if the angle sensed by the mobile terminal corresponds to 20 degrees, as shown in a third drawing of FIG. 33 (b), the mobile terminal can display message content on the first display area 21/22 and the second display area 30. This is because, since the whole of the display unit comes into sight of a user, it is intended to provide content to the user in the display unit. In this instance, the mobile terminal displays not only a list of a plurality of messages but also a pop-up icon on the display unit to enable the user to respond to a message. Meanwhile, as shown in the third drawing of FIG. 33 (b), if the angle sensed by the mobile terminal corresponds to 20 degrees, second content is not provided to a counterpart person except the user of the mobile terminal.

Meanwhile, although it is not depicted in FIG. 33, unlike the embodiment of FIG. 33 (a), an angle sensed by the mobile terminal may increase. In this instance, in opposite to the embodiment of FIG. 33 (b), the mobile terminal displays content on the whole of the display unit and can gradually change to display the content on the bottom part of the first display area.

In particular, according to the aforementioned embodiments, a user uses content preferred by the user on an area capable of being easily recognized by the user and can provide such default content as watch content to a different person by displaying the default content on an area, which is difficult for the user to recognize, according to an angle change of a wrist of the user.

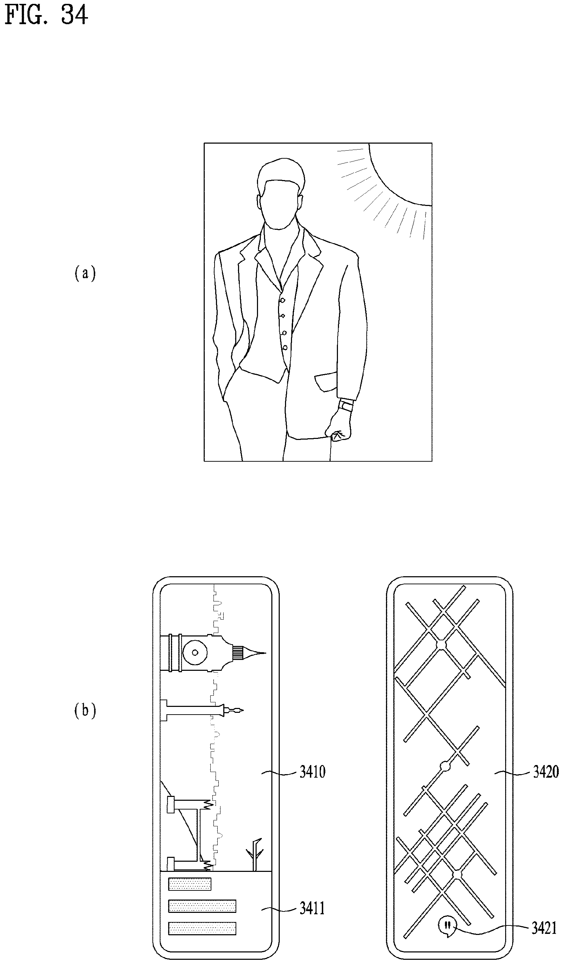

FIG. 34 is a diagram illustrating an example of controlling contents displayed on a display unit based on an angle sensed by a mobile terminal related to an embodiment of the present invention. More specifically, FIG. 34 shows an embodiment of controlling content displayed on the display unit when the mobile terminal is worn on a user and the mobile terminal is deviated from a gaze of the user.

As shown in FIG. 34 (a), a user wearing the mobile terminal may bring down an arm on which the mobile terminal is worn. In this instance, a part of the display unit of the mobile terminal may come into sight of the user only. For example, in an embodiment of FIG. 34 (a), if the user glances down at the ground, a bottom part 21 of a first display area of the mobile terminal can be seen. In addition, in the embodiment of FIG. 34 (a), the mobile terminal may determine that a face of a user is not recognized in an angle of view of a camera via the camera mounted on the mobile terminal.

In this instance, the mobile terminal displays content necessary for the user on a partial area of the display unit only and can display an image on the remaining area of the display unit. In particular, Further, when the user glances down at the ground while bringing down the arm, the user can recognize information necessary for the user. In addition, by doing so, the mobile terminal can be recognized as an accessory to other persons except the user due to an image displayed on the mobile terminal.

For example, as shown in a first drawing of FIG. 34 (b), the mobile terminal displays a notification 3411 on the bottom part of the first display area and can display an image 3410 on the remaining area of the display unit. In addition, for example, as shown in a second drawing of FIG. 34 (b), the mobile terminal displays an icon 3421 indicating an application of which an event has occurred on the bottom part of the first display area and can display an image 3420 on the remaining area of the display unit.

In particular, according to the aforementioned embodiments, although a user brings down an arm on which the mobile terminal is worn, the mobile terminal displays such simple information as a notification on the bottom part of the first display area and enables the user to check minimum information.

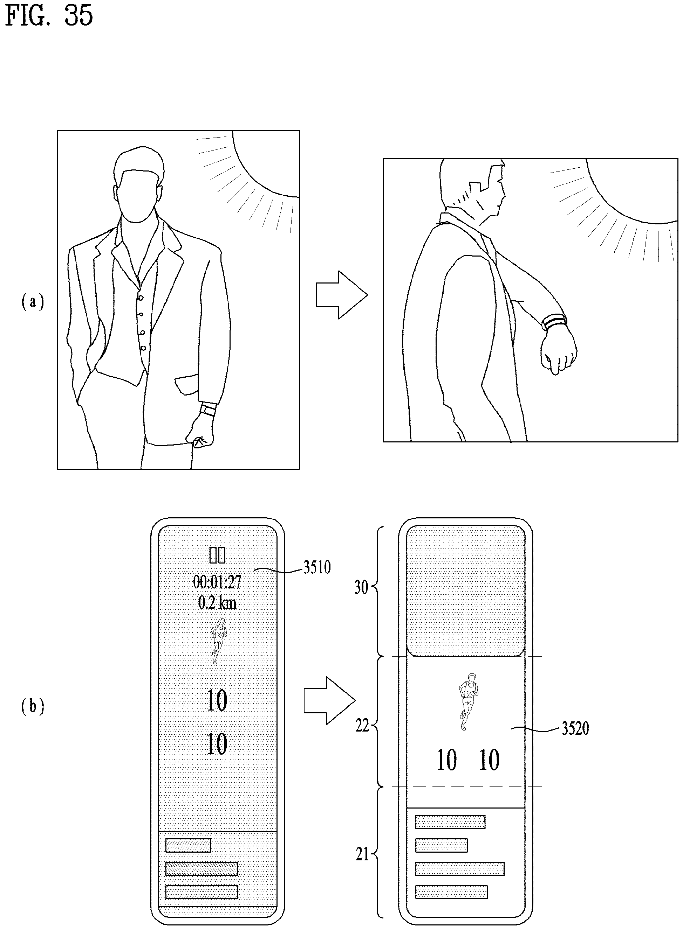

In the following, FIGS. 35 to 39 show embodiments of controlling contents displayed on the display unit based on an illumination value sensed by the mobile terminal. In this instance, the illumination value sensed by the mobile terminal can correspond to an illumination value sensed by an illumination sensor mounted on the mobile terminal. In addition, in the embodiments of FIGS. 35 to 39, assume that the mobile terminal is worn on a user.

First of all, FIG. 35 is a diagram illustrating an example of controlling contents displayed on a display unit based on an illumination value sensed by a mobile terminal related to an embodiment of the present invention. More specifically, FIG. 35 shows an embodiment of controlling content displayed on a display unit based on an illumination value and a gesture sensed by the mobile terminal.

The mobile terminal can sense a gesture input. As shown in FIG. 35 (a), the gesture input can correspond to an operation of raising an arm from a state of bringing down the arm. In addition, the mobile terminal can sense an illumination value. As shown in FIG. 35 (a), when the arm is raised, the mobile terminal can sense a higher illumination value compared to the state of bringing down the arm. In addition, an illumination value sensed in a state of raising the arm can correspond to a value higher than a predetermined illumination value.

In this instance, as shown in a first drawing of FIG. 35 (b), when a user lowers their arm, the mobile terminal can display the display unit with first illumination. In this instance, the first illumination can correspond to illumination lower than the predetermined illumination value. In particular, when the user lowers their arm, the mobile terminal can darkly display the display unit.

Subsequently, as shown in a second drawing of FIG. 35 (b), when the user raises their arm, the mobile terminal can apply a second illumination to the display unit. More specifically, the mobile terminal can display a first display area 21/22 of the display unit with the second illumination. In this instance, the second illumination can correspond to an illumination higher than the predetermined illumination value. In particular, as shown in FIG. 35 (b), if a user raises their arm on which the mobile terminal is worn from the lowered state, the display unit of the mobile terminal can brightly display the first display area 21/22 only.

Meanwhile, if the user raises their arm on which the mobile terminal is worn, the mobile terminal can display both the first display area 21/22 and the second display area 30 with the second illumination. According to the aforementioned embodiments, when a user does not use the mobile terminal, the mobile terminal darkly displays the display unit. On the contrary, when a user uses the mobile terminal, the mobile terminal can brightly display a display area in use.

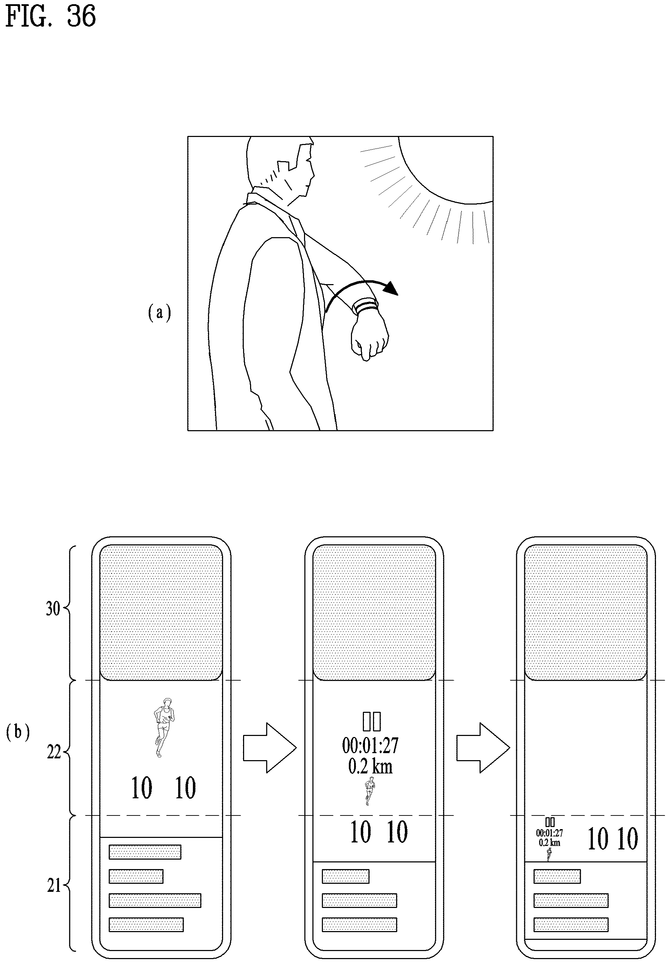

Next, FIG. 36 is a diagram illustrating an example of controlling contents displayed on a display unit based on an illumination value sensed by a mobile terminal related to an embodiment of the present invention. More specifically, FIG. 36 shows an embodiment of controlling content displayed on a display unit based on an illumination value and an angle sensed by the mobile terminal.

The mobile terminal can sense an angle. As shown in FIG. 36 (a), an angle sensed by the mobile terminal can correspond to an angle of a wrist of a user rotating in outer direction. For example, the angle sensed by the mobile terminal may change between about 45 degrees and about 90 degrees. In relation to this, as mentioned earlier in FIG. 30, the sensed angle shown in FIG. 36 (a) may not belong to a predetermined angle range. In addition, the mobile terminal can sense an illumination value. As shown in FIG. 36 (a), since it is day time with sunlight, the mobile terminal, the mobile terminal can sense an illumination value higher than a predetermined illumination value.

In this instance, as shown in FIG. 36 (b), since the angle sensed by the mobile terminal does not belong the predetermined angle range mentioned earlier in FIG. 30, the mobile terminal can deactivate the second display area 30. In addition, as shown in FIG. 36 (b), the mobile terminal can control contents displayed on the first display area 21/22 to be displayed on the bottom part 21 of the first display area only according to a change of the sensed angle.

In addition, as the sensed angle is changing, the mobile terminal can display the display unit with higher illumination. In particular, according to an embodiment of FIG. 36 (b), the brightness of the content displayed on a third drawing of FIG. 36 (b) can be brighter than brightness of the content displayed on a first drawing of FIG. 36 (a). In addition, as shown in FIG. 36 (b), since an area on which contents are displayed is getting smaller according to an angle change, the mobile terminal can display a plurality of contents on the area by gradually reducing a plurality the contents.

Meanwhile, if contents including document content or a list are displayed on the first display area 21/22, the mobile terminal can scroll the contents based on a change of an sensed angle. Further, unlike the embodiment of FIG. 36 (a), the mobile terminal can sense decrease of an angle sensed by the mobile terminal. In this instance, in opposite to the embodiment of FIG. 36 (b), the mobile terminal displays content on the bottom part 21 of the first display area and can gradually change to display the content on the whole of the first display area 21/22.

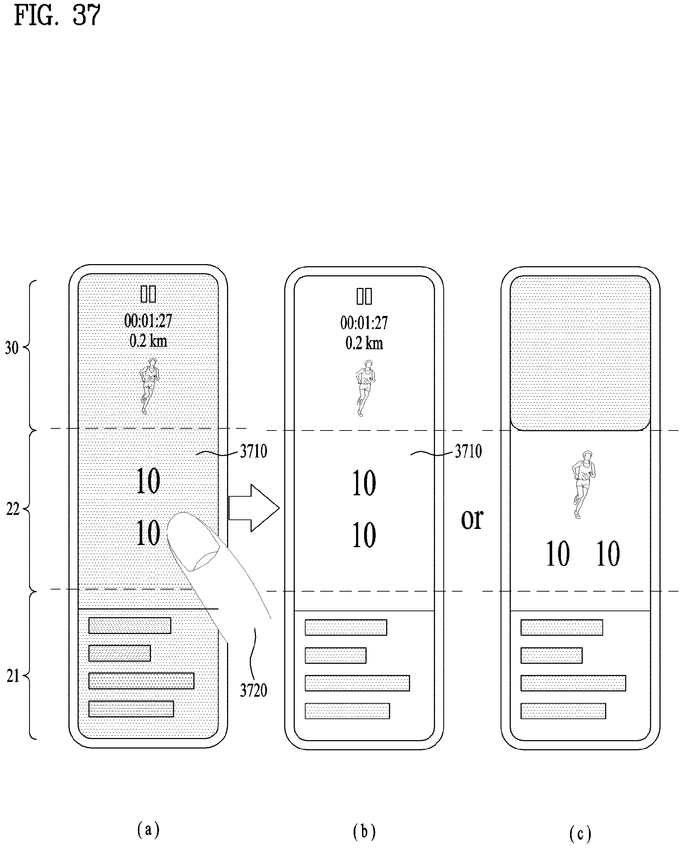

FIG. 37 is a diagram illustrating an example of controlling contents displayed on a display unit based on an illumination value sensed by a mobile terminal related to an embodiment of the present invention. More specifically, FIG. 37 shows an embodiment of controlling contents displayed on the display unit based on an illumination value and an input signal sensed by the mobile terminal.

In the embodiment of FIG. 37, assume that the mobile terminal senses an illumination value higher than a predetermined illumination value. If surrounding of the mobile terminal is bright, although the mobile terminal displays contents with a default illumination, it may be difficult for a user to recognize the contents displayed on the display unit. For example, referring to FIG. 37 (a), although contents are displayed on the display unit with a default illumination, a user may recognize the contents as dark.

In this instance, the mobile terminal can sense a first input signal 3720 for the display unit. In this instance, the first input signal can correspond to a short touch input. In this instance, in one embodiment, as shown in FIG. 37 (b), the mobile terminal can display the display unit with a higher illumination. More specifically, the mobile terminal can display the first display area 21/22 and the second display area 30 with a higher illumination according to the first input signal 3720. By doing so, a user can easily recognize contents displayed on the mobile terminal although surrounding of the user is bright.

In another embodiment, as shown in FIG. 37 (c), the mobile terminal can display the first display area 21/22 with a higher illumination according to the first input signal 3720. The mobile terminal can display an area corresponding to a position on which the input signal is sensed with a higher illumination based on the position on which the first input signal 3720 is sensed. By doing so, a user puts an input signal on an area preferred to be used and can easily recognize contents displayed on the area. In this instance, unlike the embodiment of FIG. 37 (b), the mobile terminal reduces the content displayed on the whole of the display unit and can display the reduced content on the first display area 21/22 where the illumination is high.

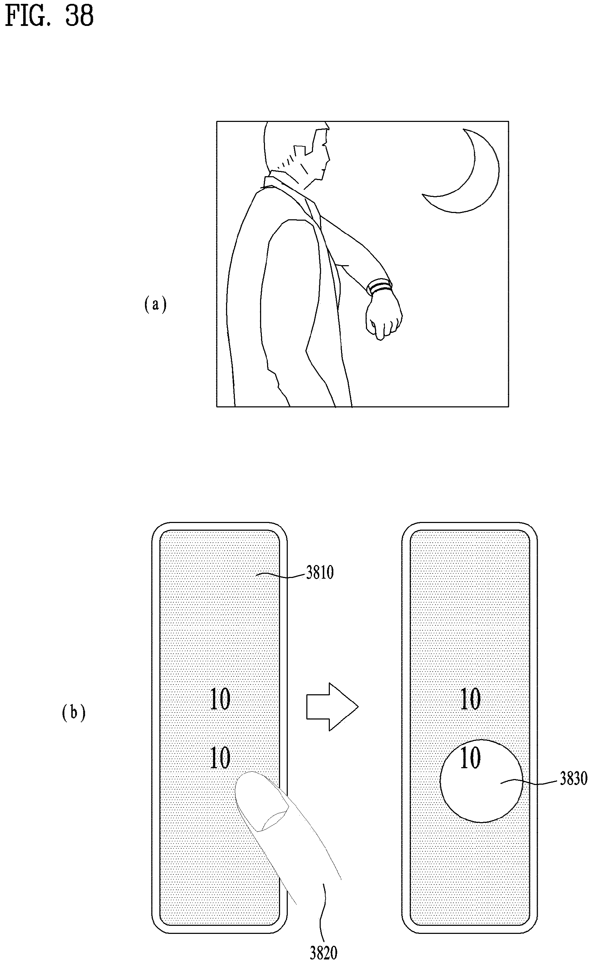

FIG. 38 is a diagram illustrating an example of controlling contents displayed on a display unit based on an illumination value sensed by a mobile terminal related to an embodiment of the present invention. More specifically, FIG. 38 shows an embodiment of controlling content displayed on the display unit based on an illumination value and an input signal sensed by the mobile terminal.

The mobile terminal can sense an illumination value. As shown in FIG. 38 (a), since surrounding environment of the mobile terminal corresponds to night, the illumination value sensed by the mobile terminal may be lower than a predetermined illumination value. In addition, for example, a user can lower an illumination value sensed by the mobile terminal by intentionally cover the display unit by hand. In this instance, as shown in a first drawing of FIG. 38 (b), the mobile terminal can display the display unit with a lower illumination according to the sensed illumination value. Hence, it may be difficult for a user to recognize content 3810 displayed on the display unit.

Meanwhile, as shown in the first drawing of FIG. 38 (b), the mobile terminal can sense a first input signal 3820 for the display unit. For example, the first input signal can correspond to a short touch input. In this instance, as shown in a second drawing of FIG. 38 (b), the mobile terminal can display a part 3830 corresponding to a position on which the first input signal 3820 is sensed with a higher illumination. In particular, when a user is difficult to see displayed content, the user puts a touch input on a part preferred to be used and may be then able to use the corresponding part only.

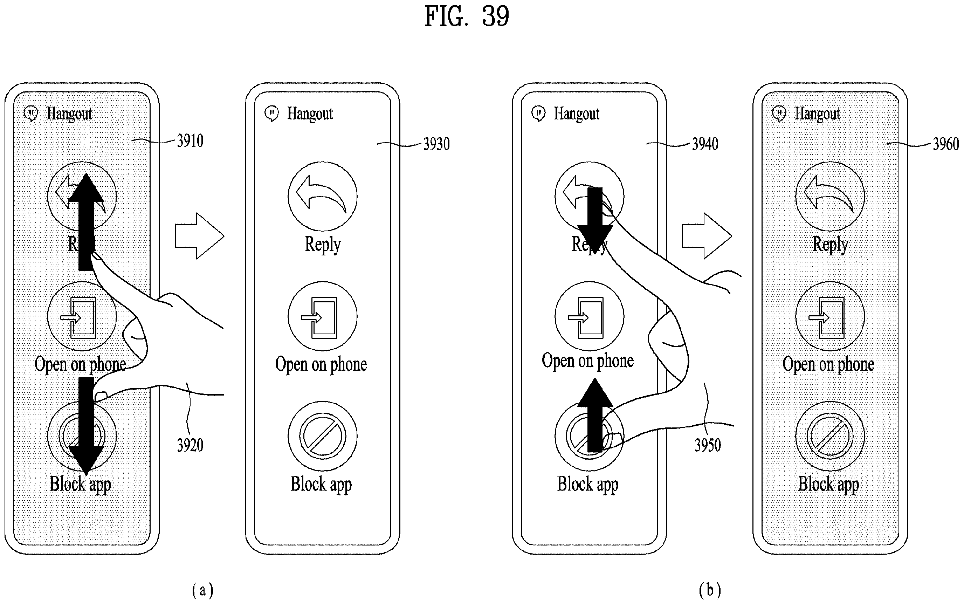

FIG. 39 is a diagram illustrating an example of controlling contents displayed on a display unit based on an illumination value sensed by a mobile terminal related to an embodiment of the present invention. More specifically, FIG. 39 shows an embodiment of controlling content displayed on the display unit based on an illumination value and an input signal sensed by the mobile terminal. Similar to the embodiment of FIG. 38, in the embodiment of FIG. 39, assume that the illumination value sensed by the mobile terminal is lower than a predetermined illumination value.

In one embodiment, as shown in FIG. 39 (a), the mobile terminal can display the display unit with a lower illumination based on the illumination value sensed by the mobile terminal. In this instance, the mobile terminal can sense a first input signal 3920 for the display unit 3910. In this instance, the first input signal can correspond to a pinch-out touch input. In this instance, as shown in a right drawing of FIG. 39 (a), the mobile terminal can display the display unit 3930 with a higher illumination.

In another embodiment, as shown in FIG. 39 (b), when the display unit 3940 is displayed with the higher illumination, the mobile terminal can sense a second input signal 3950. In this instance, the second input signal 3950 can correspond to a pinch-in touch input. In this instance, as shown in a right drawing of FIG. 39 (b), the mobile terminal can display the display unit 3960 with a lower illumination in accordance with an illumination value sensed by the mobile terminal.

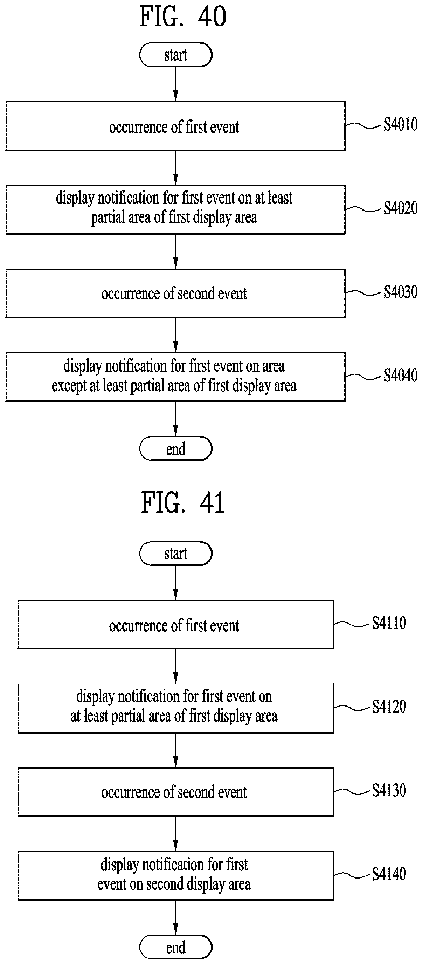

FIG. 40 is a flowchart for a method of controlling a mobile terminal according to one embodiment of the present invention. Each of the steps of FIG. 40 described in the following can be controlled by the controller of the mobile terminal shown in FIG. 1. First of all, a first event may occur (S4010). As mentioned earlier in FIG. 18, an occurred event can include message reception, application notification and the like.

Subsequently, the mobile terminal can display a notification for the first event on at least a partial area of a first display area (S4020). More specifically, the mobile terminal can display the notification for the first event on a bottom part of the first display area. As mentioned earlier in FIG. 18, when a new event occurs, the mobile terminal can preferentially display a notification for the newly occurred event on the first display area. Meanwhile, the mobile terminal can display predetermined content on the first display area before the first event occurs.

And, a second event may occur (S4030). In this instance, the second event can correspond to an event occurred after the first event has occurred. Subsequently, the mobile terminal can display the notification for the first event on an area except the at least partial area of the first display area (S4030). More specifically, the mobile terminal can display the notification for the first event on an upper part of the first display area. In this instance, as mentioned earlier in FIG. 18, the mobile terminal can display a notification for the second event on the bottom part of the first display area. And, in this instance, the mobile terminal can display the predetermined content on a second display area.

FIG. 41 is a flowchart for a method of controlling a mobile terminal according to one embodiment of the present invention. Each of the steps of FIG. 41 described in the following can be controlled by the controller of the mobile terminal shown in FIG. 1. In each embodiment of FIG. 41, detail explanation on a part identical to the aforementioned embodiment of FIG. 40 or a part corresponding to the aforementioned embodiment of FIG. 40 is omitted.

First of all, a first event may occur (S4110). Subsequently, the mobile terminal can display a notification for the first event on at least a partial area of a first display area (S4120). More specifically, the mobile terminal can display the notification for the first event on a bottom part of the first display area. Subsequently, a second event may occur (S4130). In this instance, the mobile terminal can display the notification for the first event on a second display area (S4140). In this instance, as mentioned earlier in FIG. 20, the mobile terminal can display a notification for the second event on the bottom part of the first display area. In addition, the mobile terminal can display predetermined content on an upper part of the first display area.

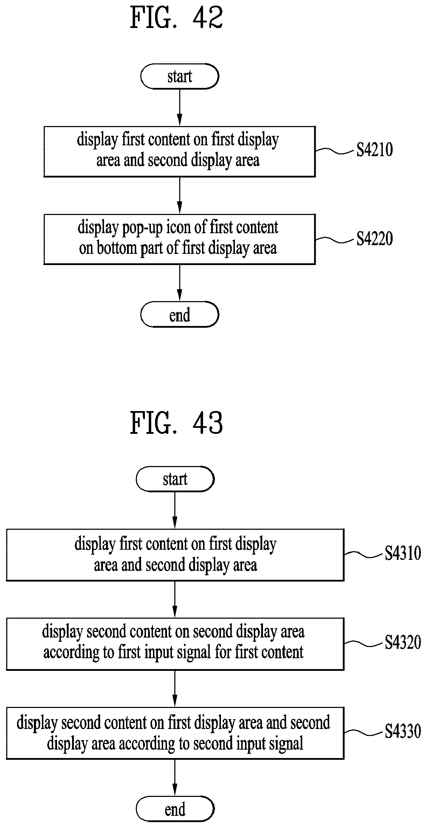

FIG. 42 is a flowchart for a method of controlling a mobile terminal according to one embodiment of the present invention. Each of the steps of FIG. 42 described in the following can be controlled by the controller of the mobile terminal shown in FIG. 1. The mobile terminal can display first content on a first display area and a second display area (S4210). As mentioned earlier in FIG. 22, the mobile terminal can display the first content on the whole of a display unit.

Subsequently, the mobile terminal can display a pop-up icon of the first content on a bottom part of the first display area (S4220). As mentioned earlier in FIG. 22, the pop-up icon can correspond to an icon indicating a progress of the first content. Hence, if the progress of the first content is terminated, the mobile terminal can eliminate or delete the pop-up icon from the display unit.

FIG. 43 is a flowchart for a method of controlling a mobile terminal according to one embodiment of the present invention. Each of the steps of FIG. 43 described in the following can be controlled by the controller of the mobile terminal shown in FIG. 1. The mobile terminal can display first content on a first display area and a second display area (S4310). In this instance, the first content can correspond to content including a list. In addition, as mentioned earlier in FIG. 24, the mobile terminal can display a pop-up icon on a bottom part of the first display area. In this instance, the pop-up icon can correspond to an icon for controlling the first content.

Subsequently, the mobile terminal can display second content on the second display area according to a first input signal for the first content (S4320). As mentioned earlier in FIG. 24, the first input signal can correspond to a flicking touch input or a drag touch input in down direction. In addition, if the second content is displayed on the second display area, the mobile terminal can eliminate or delete the pop-up icon form the display unit.

Subsequently, the mobile terminal can display the second content on the first display area and the second display area according to a second input signal (S4330). As mentioned earlier in FIG. 24, the second input signal can correspond to a flicking touch input or a drag touch input in down direction. In addition, a position at which the second input signal starts can correspond to a point of the second display area.

Meanwhile, if the second input signal starts at the first display area, the mobile terminal can scroll the first content according to the second input signal. In addition, the mobile terminal can eliminate the second content form the display unit according to a third input signal and may be then able to display the first content on the first display area and the second display area again. In this instance, the third input signal can correspond to a drag touch input or a flicking touch input in up direction. In addition, a position at which the third input signal starts can correspond to the second display area.

Various embodiments may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments. As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, are therefore intended to be embraced by the appended claims.

## Claims

1. A watch-type mobile terminal (300), comprising:
a wireless communication unit configured to provide wireless communication;
a display unit (510) including a first display area (20) and a second display area (30) located at a top of the first display area, said first display area being more closely arranged to a user wearing the watch-type terminal and including at least an upper part (22) arranged closer to the second display area and a lower part (21) below the upper part;
a sensing unit (140); and
a controller (180) configured to:
display a predetermined content on the display unit, and
in response to a first event occurring on the mobile terminal, display a first notification for the first event on the lower part of the first display area,
wherein the predetermined content is displayed on the upper part of the first display area before the first event occurs,
**characterized in that** the controller (180) is configured to:
in response to a second event occurring on the mobile terminal (300), move the first notification to one of the upper part of the first display area (20) and the second display area (30) based on a priority of the first notification compared to the predetermined content and display a second notification for the second event on the lower part of the first display area (20),
wherein the second event occurs after the first event,
wherein the controller (180) is further configured to move the first notification to the upper part of the first display area (20) and move the predetermined content to the second display area (30) when the priority of the first notification is greater than the priority of the predetermined content, and to continue to display the predetermined content in the upper part of the first display area (20) and move the first notification to the second display area (30) when the priority of the first notification is less than the priority of the predetermined content.

2. The watch-type mobile terminal of claim 1, wherein the priority of the predetermined content can be set by a user-setting.

3. The watch-type mobile terminal of claim 1 or 2, wherein the second display area (30) is farther from the user's gaze than the first display area (20), when the user rests their wrist at an angle on a flat surface.

4. A method of controlling a watch-type mobile terminal (300) including a display unit (510) including a first display area (20) and a second display area (30) located at a top of the first display area (20), the first display area (20) being more closely arranged to a user wearing the watch-type terminal (300) and including at least an upper part (22) arranged closer to the second display area (30) and a lower part (21) below the upper part, the method comprising:
displaying a predetermined content on the display unit (510), and
in response to a first event occurring on the mobile terminal (300), displaying a first notification for the first event on the lower part of the first display area (20),
wherein the predetermined content is displayed on the upper part of the first display area (20) before the first event occurs,
**characterized by:**
in response to a second event occurring on the mobile terminal (300),
moving the first notification to one of the upper part of the first display area (20) and the second display area (30) based on a priority of the first notification compared to the predetermined content and displaying a second notification for the second event on the lower part of the first display area (20),
wherein the second event occurs after the first event, and
wherein the method includes moving the first notification to the upper part of the first display area (20) and moving the predetermined content to the second display area (30) when the priority of the first notification is greater than the priority of the predetermined content, and continuing to display the predetermined content in the upper part of the first display area (20) and moving the first notification to the second display area (30) when the priority of the first notification is less than the priority of the predetermined content.

5. The method of claim 4, wherein the priority of the predetermined content can be set by a user-setting.

6. The method of claim 4 or 5, wherein the second display area (30) is farther from the user's gaze than the first display area, when the user rests their wrist at an angle on a flat surface.

## Patentansprüche

1. Mobiles Endgerät des Uhrentyps (300), das umfasst:
eine drahtlose Kommunikationseinheit, die konfiguriert ist, eine drahtlose Kommunikation bereitzustellen;
eine Anzeigeeinheit (510), die einen ersten Anzeigebereich (20) und einen zweiten Anzeigebereich (30), der sich an einem oberen Ende des ersten Anzeigebereichs befindet, enthält, wobei der erste Anzeigebereich näher bei einem Anwender angeordnet ist, der das Endgerät des Uhrentyps trägt, und mindestens einen oberen Teil (22), der näher an dem zweiten Anzeigebereich angeordnet ist, und einen unteren Teil (21) unter dem oberen Teil enthält;
eine Erfassungseinheit (140); und
eine Steuereinheit (180), die konfiguriert ist zum:
Anzeigen eines vorbestimmten Inhalts auf der Anzeigeeinheit und
als Reaktion auf ein erstes Ereignis, das auf dem mobilen Endgerät auftritt, Anzeigen einer ersten Benachrichtigung für das erste Ereignis auf dem unteren Teil des ersten Anzeigebereichs,
wobei der vorbestimmte Inhalt auf dem oberen Teil des ersten Anzeigebereichs angezeigt wird, bevor das erste Ereignis auftritt,
**dadurch gekennzeichnet, dass** die Steuereinheit (180) konfiguriert ist zum:
Bewegen als Reaktion auf ein zweites Ereignis, das auf dem mobilen Endgerät (300) auftritt, der ersten Benachrichtigung zum oberen Teil des ersten Anzeigebereichs (20) oder dem zweiten Anzeigebereich (30) anhand einer Priorität der ersten Benachrichtigung verglichen mit dem vorbestimmten Inhalt und Anzeigen einer zweiten Benachrichtigung für das zweite Ereignis auf dem unteren Teil des ersten Anzeigebereichs (20),
wobei das zweite Ereignis nach dem ersten Ereignis auftritt,
wobei die Steuereinheit (180) ferner konfiguriert ist, die erste Benachrichtigung zum oberen Teil des ersten Anzeigebereichs (20) zu bewegen und den vorbestimmten Inhalt zum zweiten Anzeigebereich (30) zu bewegen, wenn die Priorität der ersten Benachrichtigung höher als die Priorität des vorbestimmten Inhalts ist, und fortzufahren, den vorbestimmten Inhalt im oberen Teil des ersten Anzeigebereichs (20) anzuzeigen, und die erste Benachrichtigung zum zweiten Anzeigebereich (30) zu bewegen, wenn die Priorität der ersten Benachrichtigung kleiner als die Priorität des vorbestimmten Inhalts ist.

2. Mobiles Endgerät des Uhrentyps nach Anspruch 1, wobei die Priorität des vorbestimmten Inhalts durch eine Anwendereinstellung eingestellt werden kann.

3. Mobiles Endgerät des Uhrentyps nach Anspruch 1 oder 2, wobei der zweite Anzeigebereich (30) weiter vom Blick des Anwenders entfernt ist als der erste Anzeigebereich (20), wenn der Anwender sein Handgelenk in einem Winkel auf eine flache Fläche legt.

4. Verfahren zum Steuern eines mobiles Endgeräts des Uhrentyps (300), das eine Anzeigeeinheit (510) enthält, die einen ersten Anzeigebereich (20) und einen zweiten Anzeigebereich (30), der sich an einem oberen Ende des ersten Anzeigebereichs befindet, enthält, wobei der erste Anzeigebereich (20) näher bei einem Anwender angeordnet ist, der das Endgerät des Uhrentyps (300) trägt, und mindestens einen oberen Teil (22), der näher an dem zweiten Anzeigebereich angeordnet ist, und einen unteren Teil (21) unter dem oberen Teil enthält, wobei das Verfahren umfasst:
Anzeigen eines vorbestimmten Inhalts auf der Anzeigeeinheit (510) und
als Reaktion auf ein erstes Ereignis, das auf dem mobilen Endgerät (300) auftritt, Anzeigen einer ersten Benachrichtigung für das erste Ereignis auf dem unteren Teil des ersten Anzeigebereichs (20),
wobei der vorbestimmte Inhalt auf dem oberen Teil des ersten Anzeigebereichs (20) angezeigt wird, bevor das erste Ereignis auftritt,
**gekennzeichnet durch:**
als Reaktion auf ein zweites Ereignis, das auf dem mobilen Endgerät (300) auftritt,
Bewegen der ersten Benachrichtigung zum oberen Teil des ersten Anzeigebereichs (20) oder dem zweiten Anzeigebereich (30) anhand einer Priorität der ersten Benachrichtigung verglichen mit dem vorbestimmten Inhalt und Anzeigen einer zweiten Benachrichtigung für das zweite Ereignis auf dem unteren Teil des ersten Anzeigebereichs (20),
wobei das zweite Ereignis nach dem ersten Ereignis auftritt und
wobei das Verfahren enthält, die erste Benachrichtigung zum oberen Teil des ersten Anzeigebereichs (20) zu bewegen und den vorbestimmten Inhalt zum zweiten Anzeigebereich (30) zu bewegen, wenn die Priorität der ersten Benachrichtigung höher als die Priorität des vorbestimmten Inhalts ist, und fortzufahren, den vorbestimmten Inhalt im oberen Teil des ersten Anzeigebereichs (20) anzuzeigen, und die erste Benachrichtigung zum zweiten Anzeigebereich (30) zu bewegen, wenn die Priorität der ersten Benachrichtigung kleiner als die Priorität des vorbestimmten Inhalts ist.

5. Verfahren nach Anspruch 4, wobei die Priorität des vorbestimmten Inhalts durch eine Anwendereinstellung eingestellt werden kann.

6. Verfahren nach Anspruch 4 oder 5, wobei der zweite Anzeigebereich (30) weiter vom Blick des Anwenders entfernt ist als der erste Anzeigebereich (20), wenn der Anwender sein Handgelenk in einem Winkel auf eine flache Fläche legt.

## Revendications

1. Terminal mobile de type montre (300), comprenant :
une unité de communication sans fil configurée pour fournir une communication sans fil ;
une unité d'affichage (510) incluant une première zone d'affichage (20) et une deuxième zone d'affichage (30) située à un sommet de la première zone d'affichage, ladite première zone d'affichage étant agencée plus près d'un utilisateur portant le terminal de type montre et incluant au moins une partie supérieure (22) agencée plus près de la deuxième zone d'affichage et une partie inférieure (21) au-dessous de la partie supérieure ;
une unité de détection (140) ; et
un organe de commande (180) configuré pour :
l'affichage d'un contenu prédéterminé sur l'unité d'affichage, et
en réponse à un premier événement survenant sur le terminal mobile, l'affichage d'une première notification pour le premier événement sur la partie inférieure de la première zone d'affichage,
dans lequel le contenu prédéterminé est affiché sur la partie supérieure de la première zone d'affichage avant la survenance du premier événement,
**caractérisé en ce que** l'organe de commande (180) est configuré pour effectuer :
en réponse à un deuxième événement survenant sur le terminal mobile (300), le déplacement de la première notification à l'une de la partie supérieure de la première zone d'affichage (20) et de la deuxième zone d'affichage (30) sur la base d'une priorité de la première notification par rapport au contenu prédéterminé et l'affichage d'une deuxième notification pour le deuxième événement sur la partie inférieure de la première zone d'affichage (20),
dans lequel le deuxième événement survient après le premier événement,
dans lequel l'organe de commande (180) est en outre configuré pour effectuer le déplacement de la première notification à la partie supérieure de la première zone d'affichage (20) et le déplacement du contenu prédéterminé à la deuxième zone d'affichage (30) lorsque la priorité de la première notification est supérieure à la priorité du contenu prédéterminé, et la poursuite de l'affichage du contenu prédéterminé dans la partie supérieure de la première zone d'affichage (20) et le déplacement de la première notification à la deuxième zone d'affichage (30) lorsque la priorité de la première notification est inférieure à la priorité du contenu prédéterminé.

2. Terminal mobile de type montre selon la revendication 1, dans lequel la priorité du contenu prédéterminé peut être réglée par un réglage d'utilisateur.

3. Terminal mobile de type montre selon la revendication 1 ou 2, dans lequel la deuxième zone d'affichage (30) est plus éloignée du regard de l'utilisateur que la première zone d'affichage (20), lorsque l'utilisateur repose son poignet à un angle sur une surface plate.

4. Procédé de commande d'un terminal mobile de type montre (300) incluant une unité d'affichage (510) incluant une première zone d'affichage (20) et une deuxième zone d'affichage (30) située à un sommet de la première zone d'affichage (20), la première zone d'affichage (20) étant agencée plus près d'un utilisateur portant le terminal de type montre (300) et incluant au moins une partie supérieure (22) agencée plus près de la deuxième zone d'affichage (30) et une partie inférieure (21) au-dessous de la partie supérieure, le procédé comprenant :
l'affichage d'un contenu prédéterminé sur l'unité d'affichage (510), et
en réponse à un premier événement survenant sur le terminal mobile (300), l'affichage d'une première notification pour le premier événement sur la partie inférieure de la première zone d'affichage (20),
dans lequel le contenu prédéterminé est affiché sur la partie supérieure de la première zone d'affichage (20) avant la survenance du premier événement,
**caractérisé par** :
en réponse à un deuxième événement survenant sur le terminal mobile (300),
le déplacement de la première notification à l'une de la partie supérieure de la première zone d'affichage (20) et de la deuxième zone d'affichage (30) sur la base d'une priorité de la première notification par rapport au contenu prédéterminé et l'affichage d'une deuxième notification pour le deuxième événement sur la partie inférieure de la première zone d'affichage (20), dans lequel le deuxième événement survient après le premier événement, et
dans lequel le procédé inclut le déplacement de la première notification à la partie supérieure de la première zone d'affichage (20) et le déplacement du contenu prédéterminé à la deuxième zone d'affichage (30) lorsque la priorité de la première notification est supérieure à la priorité du contenu prédéterminé, et la poursuite de l'affichage du contenu prédéterminé dans la partie supérieure de la première zone d'affichage (20) et le déplacement de la première notification à la deuxième zone d'affichage (30) lorsque la priorité de la première notification est inférieure à la priorité du contenu prédéterminé.

5. Procédé selon la revendication 4, dans lequel la priorité du contenu prédéterminé peut être réglée par un réglage d'utilisateur.

6. Procédé selon la revendication 4 ou 5, dans lequel la deuxième zone d'affichage (30) est plus éloignée du regard de l'utilisateur que la première zone d'affichage, lorsque l'utilisateur repose son poignet à un angle sur une surface plate.
